(19) Europäisches Patentamt
European Patent Office
Office européen des brevets

(11) EP 3 590 976 A1

(12) EUROPEAN PATENT APPLICATION
published in accordance with Art. 153(4) EPC

(43) Date of publication:
**08.01.2020 Bulletin 2020/02**

(21) Application number: **18760793.2**

(22) Date of filing: **27.02.2018**

(51) Int Cl.:
***C08F 2/50*** (2006.01) ***B41C 1/00*** (2006.01)
***C08F 290/06*** (2006.01) ***C08L 101/00*** (2006.01)
***G03F 7/00*** (2006.01) ***G03F 7/004*** (2006.01)
***G03F 7/029*** (2006.01)

(86) International application number:
**PCT/JP2018/007305**

(87) International publication number:
**WO 2018/159626 (07.09.2018 Gazette 2018/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **28.02.2017 JP 2017037593**

(71) Applicant: **Fujifilm Corporation**
**Minato-ku**
**Tokyo 106-8620 (JP)**

(72) Inventors:
- **ISHIJI Yohei**
**Haibara-gun**
**Shizuoka 421-0396 (JP)**
- **NOGOSHI Keisuke**
**Haibara-gun**
**Shizuoka 421-0396 (JP)**

(74) Representative: **Hoffmann Eitle**
**Patent- und Rechtsanwälte PartmbB**
**Arabellastraße 30**
**81925 München (DE)**

# (54) CURABLE COMPOSITION, LITHOGRAPHIC PRINTING PLATE PRECURSOR, AND METHOD FOR PREPARING LITHOGRAPHIC PRINTING PLATE

(57) Provided is a curable composition which includes a salt compound comprising (A) an organic anion in which a negative charge is present on an aluminium atom or a phosphorus atom, and (B) a counter cation. The curable composition exhibits excellent heat stability over time, and is cured excellently as a result of being irradiated with light. Also provided are: a lithographic printing plate precursor which exhibits excellent heat stability over time, and excellent on-press developability, and with which a lithographic printing plate having excellent printing durability can be prepared; a lithographic printing plate precursor which exhibits excellent heat stability over time, and excellent plate inspection properties and on-press developability, and with which a lithographic printing plate exhibiting excellent printing durability can be prepared; and a method for preparing a lithographic printing plate which uses the lithographic printing plate precursor.

EP 3 590 976 A1

## Description

## BACKGROUND OF THE INVENTION

1. Field of the Invention

The present invention relates to a curable composition, a lithographic printing plate precursor, and a method for producing a lithographic printing plate.

2. Description of the Related Art

A curable composition, particularly, a photocurable composition is a composition having a property of being cured in an irradiated portion by the irradiation with light, and it is possible to produce an image-forming material by applying and drying a coating fluid formed by appropriately dissolving or dispersing this composition in a solvent on an appropriate support to form a photocurable film. As the image-forming material, image-forming materials for which curing by image exposure is used, such as lithographic printing plate precursors, printed-wiring boards, color filters, and photo masks are exemplified.

Hereinafter, a lithographic printing plate precursor will be described as an example.

Generally, a lithographic printing plate includes a lipophilic image area that receives ink in a printing process and a hydrophilic non-image area that receives dampening water. Lithographic printing is a method in which the properties of water and oil-based ink that repel each other are used, the lipophilic image area of the lithographic printing plate is used as an ink-receiving portion, the hydrophilic non-image area is used as a dampening water-receiving portion (non-ink-receiving portion), a difference in the adhesive property of ink is caused on the surface of the lithographic printing plate, the ink is absorbed only in the image area, and then the ink is transferred to a body to be printed such as paper, thereby carrying out printing.

In a plate making step of producing a lithographic printing plate from a lithographic printing plate precursor, at the moment, image exposure is carried out using a computer to plate (CTP) technology. That is, image exposure is directly carried out on a lithographic printing plate precursor by means of scanning, exposure, or the like using a laser or a laser diode without using a lith film.

In addition, regarding the plate making of lithographic printing plate precursors, due to the intensifying interest in the global environment, an environmental issue of waste liquid generated by wet processes such as a development process has gathered attention, and accordingly, there have been attempts to simplify or remove development processes. As one of simple development processes, a method called "on-machine development" has been proposed. The on-machine development refers to a method in which, after the image exposure of a lithographic printing plate precursor, a development process of the related art is not carried out, and instead, the lithographic printing plate precursor is attached to a printer, and a non-image area in an image-recording layer is removed at the initial phase of an ordinary printing step.

Generally, lithographic printing plate precursors have an image-recording layer on a support such as an aluminum plate. In the case of a negative-type image-recording layer, the image-recording layer has a function of forming an image area by being cured in an exposed portion by image exposure. Therefore, the image-recording layer contains a component for forming an image by image exposure. As one component that is included in the image-recording layer, a photopolymerization initiator generating a radical by exposure is exemplified.

As the photopolymerization initiator that is included in the image-recording layer, salt compounds including an onium such as iodonium or sulfonium and an inorganic or organic anion as a counter anion are used. As the inorganic or organic anion as the counter anion, a sulfonate anion, a carboxylate anion, a tetrafluoroborate anion, a hexafluorophosphate anion, a p-toluenesulfonate anion, a tosylate anion, and the like are known. For example, JP2009-538446A describes a radiation sensitive composition containing a salt compound including a diaryliodonium cation having a specific structure and a borate anion having a specific structure as a photopolymerization initiator.

Generally, as a previous step of attaching the lithographic printing plate to the printer, an operation of inspecting and identifying an image on the lithographic printing plate (the inspection of the plate) in order to check whether or not the image is recorded as intended on the lithographic printing plate is carried out. Particularly, in polychromatic printing, the capability of determining a register mark which serves as a mark for registration is critical in printing operations.

In lithographic printing plate precursors that are subjected to an ordinary development process step, an image-recording layer is colored, thereby obtaining a colored image by means of a development process, and thus it is possible to easily check the image before the lithographic printing plate is attached to a printer.

However, in on-machine development-type or process-less (development-less)-type lithographic printing plate precursors on which an ordinary development process step is not carried out, it is difficult to check an image on the lithographic printing plate precursor in a phase of attaching the lithographic printing plate precursor to a printer, and thus

it is impossible to sufficiently inspect the plate. Therefore, for on-machine development-type or process-less (development-less)-type lithographic printing plate precursors, there is a demand for means for checking an image in a phase of being exposed, that is, the formation of a so-called print-out image in which an exposed region develops or does not develop a color without adversely affecting on-machine development.

As means for forming the print-out image, a method in which a photo-acid generator and an acid color-developing dye (leuco dye) are added to an image-recording layer, and the acid color-developing dye is caused to develop color by an action of an acid generated from the photo-acid generator by image exposure, thereby forming a colored image is known.

Furthermore, lithographic printing plate precursors desirably have favorable thermal and temporal stability. In a case in which the thermal and temporal stability is poor, dark polymerization processes in the lithographic printing plate precursors due to thermal aging, and consequently, on-machine developability degrades. In addition, in lithographic printing plate precursors including an acid color-developing dye such as a leuco dye, there is a problem of the occurrence of ring-shaped color development due to thermal aging. Therefore, the thermal and temporal stability is an important characteristic to lithographic printing plate precursors.

## SUMMARY OF THE INVENTION

An object of the present invention is to provide a curable composition that has favorable thermal and temporal stability and favorably cures by light irradiation.

Another object of the present invention is to provide a lithographic printing plate precursor which has favorable thermal and temporal stability, is excellent in terms of on-machine developability, and can be used to produce lithographic printing plates having excellent printing resistance.

Still another object of the present invention is to provide a lithographic printing plate precursor which has favorable thermal and temporal stability, is excellent in terms of a plate inspection property and on-machine developability, and can be used to produce lithographic printing plates having excellent printing resistance.

Still another object of the present invention is to provide a method for producing a lithographic printing plate using the lithographic printing plate precursor.

Means for achieving the above-described objects will be described below.

(1) A curable composition comprising: a salt compound including (A) an organic anion having a negative charge present on an aluminum atom or a phosphorus atom and (B) a counter cation.

(2) The curable composition according to (1), in which the organic anion is represented by Formula (I), (II), or (III).

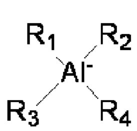
(I)

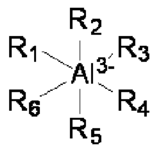
(II)

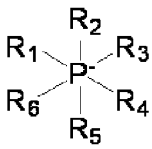
(III)

In Formulae (I), (II), and (III), $R_1$, $R_2$, $R_3$, $R_4$, $R_5$, and $R_6$ each independently represent an alkyl group, an aryl group, an alkenyl group, an alkynyl group, a cycloalkyl group, or a heterocyclic group or two or more of $R_1$, $R_2$, $R_3$, $R_4$, $R_5$, and $R_6$ may bond to each other to form a ring with the aluminum atom or the phosphorus atom.

(3) The curable composition according to (1) or (2), in which the organic anion is represented by Formula (IV), (V), or (VI).

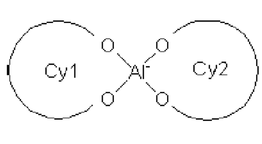
(IV)

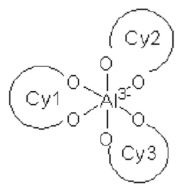
(V)

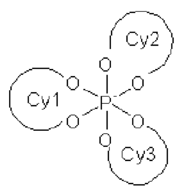
(VI)

In Formulae (IV), (V), and (VI), Cy1 to Cy3 may be identical to or different from each other and represent a ring

structure formed with the aluminum atom or the phosphorus atom and two oxygen atoms that directly bond to the aluminum atom or the phosphorus atom.

(4) The curable composition according to any one of (1) to (3), in which the organic anion is represented by Formula (VII), (VIII), or (IX).

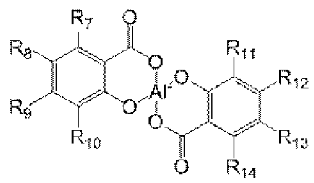
(VII)

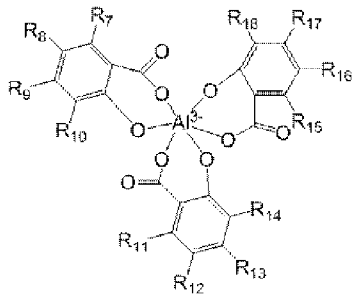
(VIII)

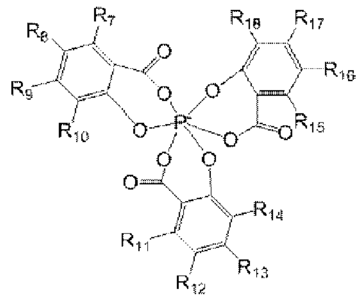
(IX)

In Formulae (VII), (VIII), and (IX), $R_7$, $R_8$, $R_9$, $R_{10}$, $R_{11}$, $R_{12}$, $R_{13}$, $R_{14}$, $R_{15}$, $R_{16}$, $R_{17}$, and $R_{18}$ may be identical to or different from each other and represent a hydrogen atom, an alkyl group, an alkenyl group, an aryl group, an alkoxy group, an alkoxycarbonyl group, an aryloxycarbonyl group, an alkylamide group, an arylamide group, an alkylurea group, or an arylurea group or two of the above-described atom or groups adjacent to each other may bond to each other to form a ring.

(5) The curable composition according to any one of (1) to (4), in which the counter cation is a diaryliodonium cation or a triarylsulfonium cation.

(6) The curable composition according to any one of (1) to (4), in which the counter cation is an alkali metal ion, an alkali earth metal ion, or an organic cation having a positive charge on a nitrogen atom.

(7) The curable composition according to any one of (1) to (6), further comprising: a polymerizable compound; and an infrared absorber.

(8) The curable composition according to (7), in which the infrared absorber is a cyanine colorant.

(9) The curable composition according to any one of (1) to (8), further comprising: an acid color-developing agent.

(10) The curable composition according to any one of (1) to (9), further comprising: a polymer particle.

(11) The curable composition according to any one of (1) to (10), further comprising: a binder polymer.

(12) A curable composition for a lithographic printing plate according to any one of (1) to (11).

(13) A lithographic printing plate precursor comprising: a support and an image-recording layer containing the curable composition according to any one of (1) to (12) on the support.

(14) The lithographic printing plate precursor according to (13), further comprising: a protective layer on the image-recording layer.

(15) A method for producing a lithographic printing plate comprising: a step of image-exposing the lithographic printing plate precursor according to (13) or (14); and a step of removing a non-exposed portion of the image-recording layer on a printer using at least one selected from printing ink or dampening water.

According to the present invention, it is possible to provide a curable composition that has favorable thermal and temporal stability and favorably cures by light irradiation.

In addition, according to the present invention, it is possible to provide a lithographic printing plate precursor which has favorable thermal and temporal stability, is excellent in terms of on-machine developability, and can be used to produce lithographic printing plates having excellent printing resistance.

Furthermore, according to the present invention, it is possible to provide a lithographic printing plate precursor which has favorable thermal and temporal stability, is excellent in terms of a plate inspection property and on-machine developability, and can be used to produce lithographic printing plates having excellent printing resistance.

Furthermore, according to the present invention, it is possible to provide a method for producing a lithographic printing plate using the lithographic printing plate precursor.

## DESCRIPTION OF THE PREFERRED EMBODIMENTS

Hereinafter, the present invention will be described in detail.

In the present specification, regarding the expression of a group in a compound represented by a formula, in a case in which there is no description of whether the group is substituted or unsubstituted and a case in which the group is capable of having a substituent, the group refers not only to an unsubstituted group but also to a group having a

substituent as long as there is no additional particular regulation. For example, in a formula, the description "R represents an alkyl group, an aryl group, or a heterocyclic group" means that "R represents an unsubstituted alkyl group, a substituted alkyl group, an unsubstituted aryl group, a substituted aryl group, an unsubstituted heterocyclic group, or a substituted heterocyclic group".

In the present specification, "(meth)acryl" refers to either or both of acryl and methacryl, and "(meth)acrylate" represents either or both of acrylate and methacrylate.

In the present specification, unless particularly otherwise described, the weight-average molecular weight (Mw) refers to a molecular weight that is detected using a gel permeation chromatography (GPC) analyzer in which columns of TSKgel GMHxL, TSKgel G4000HxL, and TSKgel G2000HxL (all are trade names manufactured by Tosoh Corporation) are used, tetrahydrofuran (THF) as a solvent, and a differential refractometer and is converted using polystyrene as a standard substance.

[Curable composition]

A curable composition of an embodiment of the present invention contains a salt compound including (A) an organic anion having a negative charge present on an aluminum atom or a phosphorus atom and (B) a counter cation.

The salt compound that is contained in the curable composition of the embodiment of the present invention (hereinafter, also simply referred to as "composition") (hereinafter, also simply referred to as "specific compound") is a salt compound formed by bonding (A) the organic anion having a negative charge present on an aluminum atom or a phosphorus atom and (B) the counter cation.

[Organic anion having negative charge present on aluminum atom or phosphorus atom]

The organic anion having a negative charge present on an aluminum atom or a phosphorus atom, which constitutes the specific compound according to the present invention, may be an organic anion having a negative charge on an aluminum atom or an organic anion having a negative charge on a phosphorus atom.

The organic anion having a negative charge on an aluminum atom may be an anion in which four organic groups bond to an aluminum atom by covalent bonds and the aluminum atom has one negative charge or an anion in which six organic groups bond to an aluminum atom by covalent bonds and the aluminum atom has three negative charges.

The organic anion having a negative charge on a phosphorus atom may be an anion in which six organic groups bond to a phosphorus atom by covalent bonds and the phosphorus atom has one negative charge.

Each of the organic anion having a negative charge on an aluminum atom and the organic anion having a negative charge on a phosphorus atom is preferably an organic anion represented by Formula (I), (II), or (III).

Meanwhile, the organic anion according to the present invention, similar to an ordinary anion, can be represented by a plurality of resonant structure formulae according to the electron disposition; however, in the present specification, as illustrated below, the organic anion is illustrated using a resonant structure formula having a negative charge on an aluminum atom or a phosphorus atom.

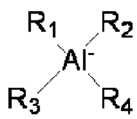

(I)

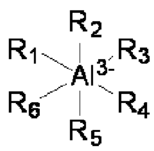

(II)

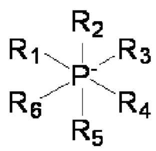

(III)

In Formulae (I), (II), and (III), $R_1$, $R_2$, $R_3$, $R_4$, $R_5$, and $R_6$ each independently represent an alkyl group, an aryl group, an alkenyl group, an alkynyl group, a cycloalkyl group, or a heterocyclic group or two or more of $R_1$, $R_2$, $R_3$, $R_4$, $R_5$, and $R_6$ may bond to each other to form a ring with an aluminum atom or a phosphorus atom.

In Formulae (I), (II), and (III), the alkyl group represented by $R_1$, $R_2$, $R_3$, $R_4$, $R_5$, or $R_6$ is preferably an alkyl group having 1 to 12 carbon atoms, more preferably an alkyl group having 1 to 8 carbon atoms, and still more preferably an alkyl group having 1 to 4 carbon atoms. The alkyl group may be linear or branched. Examples of the alkyl group include a methyl group, an ethyl group, a propyl group, an isopropyl group, a butyl group, an isobutyl group, a sec-butyl group, a tert-butyl group, a pentyl group, an isopentyl group, a hexyl group, an octyl group, a tert-octyl group, a nonyl group, a decyl group, a dodecyl group, and the like. The alkyl group may have a substituent, and examples of the substituent include an alkoxy group, an aryloxy group, an aryl group, an alkoxycarbonyl group, a cyano group, and the like.

In Formulae (I), (II), and (III), the aryl group represented by $R_1$, $R_2$, $R_3$, $R_4$, $R_5$, or $R_6$ is preferably an aryl group

having 6 to 20 carbon atoms and more preferably an aryl group having 6 to 10 carbon atoms. Examples of the aryl group include a phenyl group, a naphthyl group, and the like. The aryl group may have a substituent, and examples of the substituent include an alkyl group, an alkoxy group, an aryloxy group, an aryl group, an alkoxycarbonyl group, a cyano group, an amide group, a urea group, a halogen atom, and the like.

In Formulae (I), (II), and (III), the alkenyl group represented by $R_1$, $R_2$, $R_3$, $R_4$, $R_5$, or $R_6$ is preferably an alkenyl group having 2 to 12 carbon atoms and more preferably an alkenyl group having 2 to 6 carbon atoms. The alkenyl group may be linear or branched. Examples of the alkenyl group include an ethynyl group, a propynyl group, and the like. The alkenyl group may have a substituent, and examples of the substituent include an alkoxy group, an alkylcarbonyl group, and the like.

In Formulae (I), (II), and (III), the alkyl group represented by $R_1$, $R_2$, $R_3$, $R_4$, $R_5$, or $R_6$ is preferably an alkyl group having 2 to 12 carbon atoms and more preferably an alkyl group having 2 to 6 carbon atoms. The alkyl group may be linear or branched. Examples of the alkyl group include an ethenyl group, a propenyl group, and the like. The alkyl group may have a substituent, and examples of the substituent include an alkoxy group, an alkylcarbonyl group, and the like.

In Formulae (I), (II), and (III), the cycloalkyl group represented by $R_1$, $R_2$, $R_3$, $R_4$, $R_5$, or $R_6$ is preferably a cycloalkyl group having 3 to 8 carbon atoms and more preferably a cycloalkyl group having 3 to 6 carbon atoms. Examples of the cycloalkyl group include a cyclopentyl group, a cyclohexyl group, and the like. The cycloalkyl group may have a substituent, and examples of the substituent include an alkyl group, an alkoxy group, an alkylcarbonyl group, and the like.

In Formulae (I), (II), and (III), the hetero ring group represented by $R_1$, $R_2$, $R_3$, $R_4$, $R_5$, or $R_6$ is a group formed of a hetero ring including at least one hetero atom selected from an oxygen atom, a sulfur atom, or a nitrogen atom. The hetero ring is preferably a five-membered ring to an eight-membered ring and more preferably a five- or six-membered ring. The hetero ring group may or may not be saturated. Examples of the hetero ring group include a pyridyl group, a pyrimidyl group, a furanyl group, a pyrrolyl group, an imidazolyl group, a pyrazolyl group, a triazolyl group, a tetrazolyl group, an indolyl group, a quinolinyl group, an oxadiazolyl group, a benzoxazolyl group, and the like. The hetero ring group may have a substituent, and examples of the substituent include an alkyl group, an alkoxy group, an alkylcarbonyl group, and the like.

In Formulae (I), (II), and (III), two or more of Ri, $R_2$, $R_3$, $R_4$, $R_5$, and $R_6$ may bond to each other to form a ring with an aluminum atom or a phosphorus atom.

The ring that two or more of $R_1$, $R_2$, $R_3$, $R_4$, $R_5$, and $R_6$ that bond to each other form with an aluminum atom or a phosphorus atom is preferably a five-membered ring or a six-membered ring. In the ring that two or more of $R_1$, $R_2$, $R_3$, $R_4$, $R_5$, and $R_6$ that bond to each other form with an aluminum atom or a phosphorus atom, the aluminum atom or the phosphorus atom preferably directly bond to two oxygen atoms.

The ring that two or more of $R_1$, $R_2$, $R_3$, $R_4$, $R_5$, and $R_6$ that bond to each other form with an aluminum atom or a phosphorus atom may have a substituent and may have a fused ring. Examples of the substituent include an alkyl group, an alkoxy group, an aryloxy group, an aryl group, an alkoxycarbonyl group, a cyano group, an amide group, a urea group, a halogen atom, and the like. As the fused ring, hydrocarbon rings, for example, a benzene ring, a naphthalene ring, an anthracene ring, and the like are exemplified.

Examples of the ring that two or more of Ri, $R_2$, $R_3$, $R_4$, $R_5$, and $R_6$ that bond to each other form with an aluminum atom or a phosphorus atom include rings formed of catechol, a salicylic acid derivative, and a central atom Al or P, and the like.

The organic anion having a negative charge on an aluminum atom and the organic anion having a negative charge on a phosphorus atom are more preferably the organic anion represented by Formulae (I), (II), and (III) in which two or more of $R_1$, $R_2$, $R_3$, $R_4$, $R_5$, and $R_6$ bond to each other to form a ring with an aluminum atom or a phosphorus atom.

The organic anions having the above-described ring structure each are preferably an organic anion represented by Formula (IV), (V), or (VI).

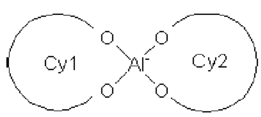

(IV)

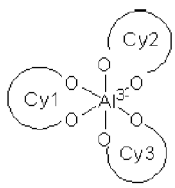

(V)

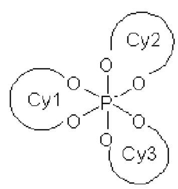

(VI)

In Formulae (IV), (V), and (VI), Cy1 to Cy3 may be identical to or different from each other and represent a ring structure formed with an aluminum atom or a phosphorus atom and two oxygen atoms that directly bond to the aluminum atom

or the phosphorus atom.

An atomic chain that constitutes the ring structure is represented by, for example, -O-C-C-O- or-O-C-C-C-O-. Here, both oxygen atoms at both ends directly bond to the aluminum atom or the phosphorus atom. A carbon atom may have a substituent, and examples thereof include an oxy group (=O), an alkyl group, and an aryl group. In addition, two adjacent carbon atoms may be fused by a hydrocarbon ring or a hetero ring. The hydrocarbon ring or the hetero ring that is fused to two adjacent carbon atoms may be a saturated ring or an unsaturated ring, and examples thereof include a benzene ring, a naphthalene ring, an anthracene ring, a pyridine ring, a quinoxaline ring, and the like. The hydrocarbon ring or the hetero ring may have a substituent, and examples of the substituent include an alkyl group, an alkoxy group, an aryloxy group, an aryl group, an alkoxycarbonyl group, a cyano group, an amide group, a urea group, a halogen atom, and the like.

The organic anions having the ring structure each are preferably an organic anion represented by Formula (VII), (VIII), or (IX).

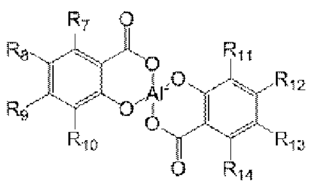

(VII)

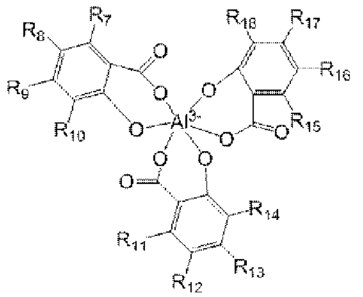

(VIII)

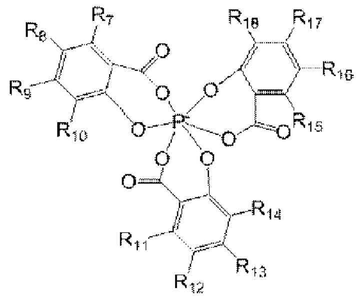

(IX)

In Formulae (VII), (VIII), and (IX), $R_7$, $R_8$, $R_9$, $R_{10}$, $R_{11}$, $R_{12}$, $R_{13}$, $R_{14}$, $R_{15}$, $R_{16}$, $R_{17}$, and $R_{18}$ may be identical to or different from each other and represent a hydrogen atom, an alkyl group, an alkenyl group, an aryl group, an alkoxy group, an alkoxycarbonyl group, an aryloxycarbonyl group, an alkylamide group, an arylamide group, an alkylurea group, or an arylurea group or two of the above-described atom or groups adjacent to each other may bond to each other to form a ring.

In Formulae (VII), (VIII), and (IX), regarding the alkyl group, the alkenyl group, and the aryl group as $R_7$, $R_8$, $R_9$, $R_{10}$, $R_{11}$, $R_{12}$, $R_{13}$, $R_{14}$, $R_{15}$, $R_{16}$, $R_{17}$, or $R_{18}$, it is possible to employ the description regarding the alkyl group, the alkenyl group, and the aryl group as $R_1$, $R_2$, $R_3$, $R_4$, $R_5$, or $R_6$ in Formulae (I), (II), and (III). In addition, regarding the alkyl group that is included in the alkoxy group, the alkoxycarbonyl group, the alkylamide group, or the alkylurea group as $R_7$, $R_8$, $R_9$, $R_{10}$, $R_{11}$, $R_{12}$, $R_{13}$, $R_{14}$, $R_{15}$, $R_{16}$, $R_{17}$, or $R_{18}$, it is possible to employ the description regarding the alkyl group as $R_1$, $R_2$, $R_3$, $R_4$, $R_5$, or $R_6$ in Formulae (I), (II), and (III), and, regarding the aryl group that is included in the aryloxycarbonyl group, the arylamide group, or the arylurea group as $R_7$, $R_8$, $R_9$, $R_{10}$, $R_{11}$, $R_{12}$, $R_{13}$, $R_{14}$, $R_{15}$, $R_{16}$, $R_{17}$, or $R_{18}$, it is possible to employ the description regarding the aryl group as $R_1$, $R_2$, $R_3$, $R_4$, $R_5$, or $R_6$ in Formulae (I), (II), and (III).

[Counter cation]

The counter cation that constitutes the specific compound according to the present invention needs to be a cation capable of forming a salt compound with the organic anion having a negative charge present on an aluminum atom or a phosphorus atom through an ionic bond.

The counter cation may be an inorganic cation or an organic cation. As the inorganic cation, alkali metal ions such as a lithium ion, a sodium ion, and a potassium ion, alkali earth metal ions such as a magnesium ion, and a calcium ion, and the like are exemplified.

As the organic cation, organic cations having a positive charge present on a nitrogen atom are exemplified. An ammonium cation, a pyridinium cation, an imidazolium cation, and the like represented by a formula: $N^+(R^{01})(R^{02})(R^{03})(R^{04})$ (here, $R^{01}$, $R^{02}$, $R^{03}$, and $R^{04}$ each independently represent an alkyl group or an aryl group) are also regarded as the organic cation having a positive charge present on a nitrogen atom.

Examples of the ammonium cation include tetramethyl ammonium, tetraethyl ammonium, tetrabutyl ammonium, and the like.

The counter cation is preferably a diaryliodonium cation or a triarylsulfonium cation. The specific compound having a diaryliodonium cation or a triarylsulfonium cation as the counter cation is extremely useful as a polymerization initiator. In addition, this specific compound also favorably functions as an acid-generating agent as described below.

For example, an iodonium cation represented by Formula (C1) and a sulfonium cation represented by Formula

(C2) are regarded as the diaryliodonium cation and the triarylsulfonium cation respectively.

$Ar1-I^{+}-Ar2$ (C1)

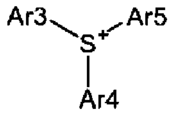

(C2)

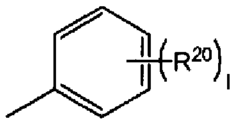

(C3)

In Formulae (C1) and (C2), Ar1, Ar2, Ar3, Ar4, and Ar5 each independently represent a group represented by Formula (C3). In Formula (C3), $R^{20}$ represents an alkyl group, an alkoxy group, or a halogen atom, and a plurality of $R^{20}$'s may be identical to or different from each other. 1 represents an integer of 0 to 5.

Specific examples of the diaryliodonium cation include a diphenyliodonium cation, a 4-methoxyphenyl-4-(2-methylpropyl) phenyliodonium cation, a 4-chlorophenyl-4-phenyliodonium cation, a 4-(2-methylpropyl) phenyl-p-tolyliodonium cation, a 4-hexyloxyphenyl-2,4,6-trimethoxyphenyliodonium cation, a 4-hexyloxyphenyl-2,4-diethoxyphenyliodonium cation, a 4-octyloxyphenyl-2,4,6-trimethoxyphenyliodonium cation, a bis(4-tert-butylphenyl) iodonium cation, and a bis(4-isopropylphenyl) iodonium cation.

Specific examples of the triarylsulfonium cation include a triphenylsulfonium cation, a bis(4-chlorophenyl)phenylsulfonium cation, a bis(4-chlorophenyl)-4-methylphenylsulfonium cation, a tris(4-chlorophenyl)sulfonium cation, a tris(2,4-dichlorophenyl)sulfonium cation, a bis(2,4-dichlorophenyl)phenylsulfonium cation, and a bis(2,4-dichlorophenyl) 4-methoxyphenylsulfonium cation.

Hereinafter, specific examples of the specific compound according to the present invention will be illustrated, but the present invention is not limited thereto. In the following specific examples of the specific compound, an organic anion and a counter cation are separately shown, and, for example, a compound I-1 is indicated to be constituted of a tetraphenylaluminum anion as the organic anion and a 4-octyloxyphenyl-2,4,6-trimethoxyphenyliodonium cation, which will also be true for other compounds I-2 to I-39.

[Table 1]

| Cation portion | Anion portion |
|---|---|
| 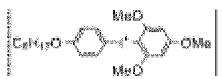 | 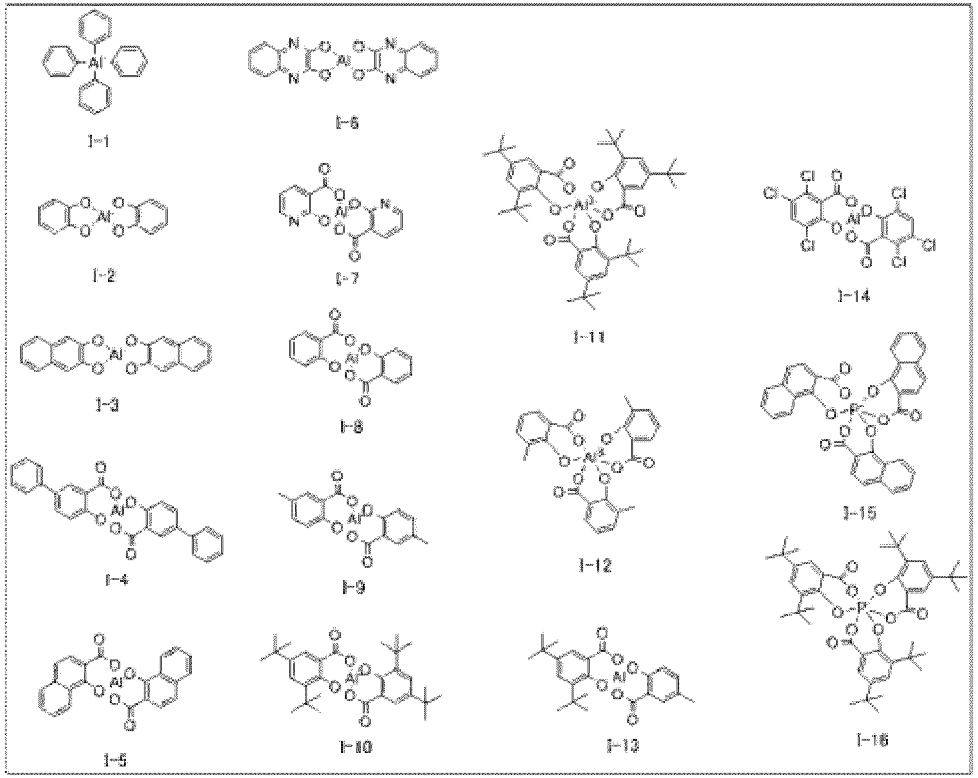 I-1, I-2, I-3, I-4, I-5, I-6, I-7, I-8, I-9, I-10, I-11, I-12, I-13, I-14, I-15, I-16 |

(continued)

| Cation portion | Anion portion (expressed as I-I-Na and the like in Examples) |
| --- | --- |
| **Na** + | 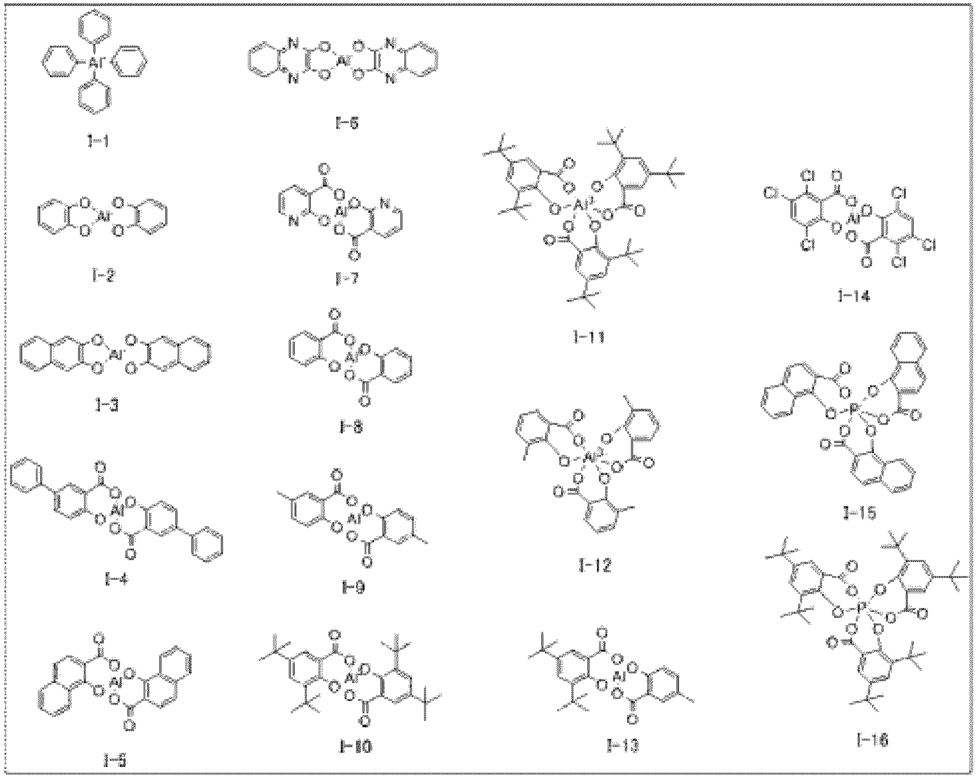 I-1, I-2, I-3, I-4, I-5, I-6, I-7, I-8, I-9, I-10, I-11, I-12, I-13, I-14, I-15, I-16 |

(continued)

| Cation portion | Anion portion |
|---|---|
| 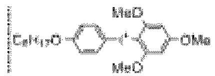 | 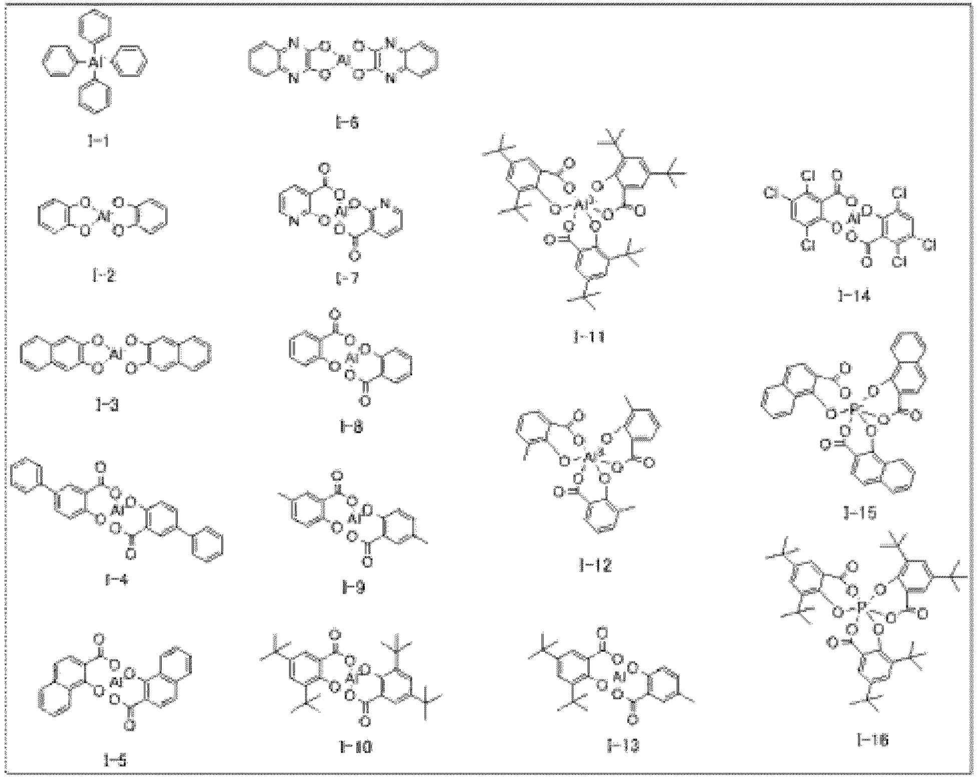 I-1 I-2 I-3 I-4 I-5 I-6 I-7 I-8 I-9 I-10 I-11 I-12 I-13 I-14 I-15 I-16 |

(continued)

| Cation portion | Anion portion (expressed as I-1-Na and the like in Examples) |
| --- | --- |
| **Na+** | 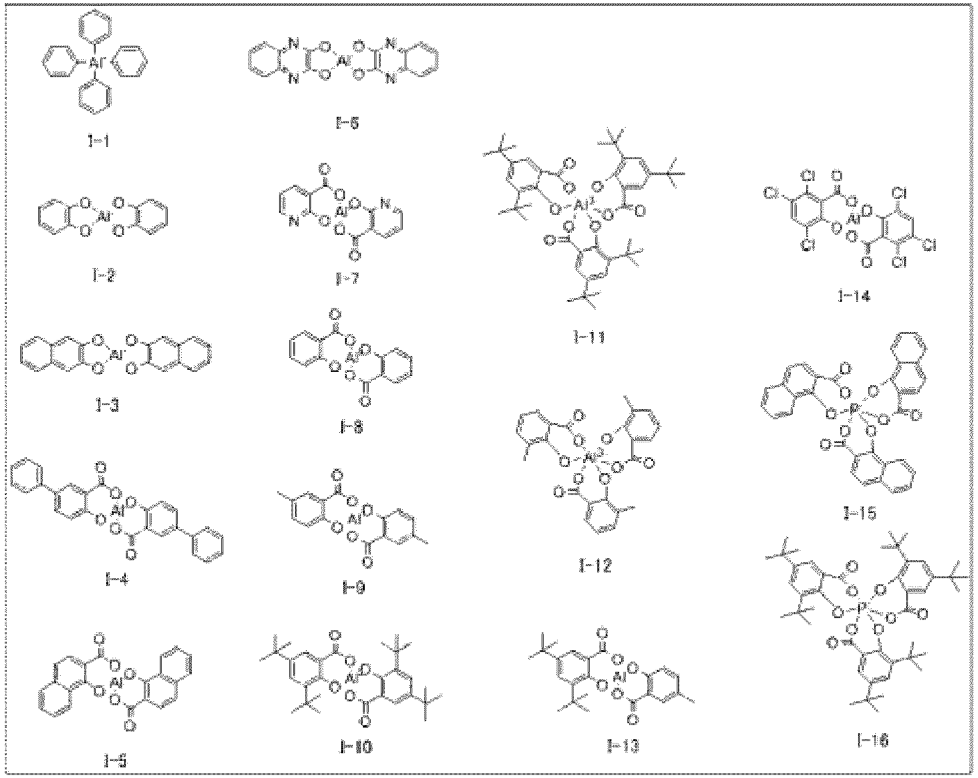 I-1, I-2, I-3, I-4, I-5, I-6, I-7, I-8, I-9, I-10, I-11, I-12, I-13, I-14, I-15, I-16 |

[Table 2]

| Cation portion | Anion portion |
|---|---|
| 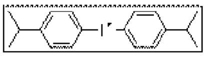 | 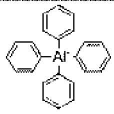 I-17 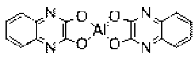 I-22 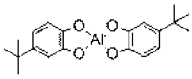 I-18 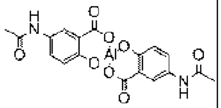 I-23 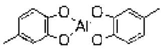 I-19 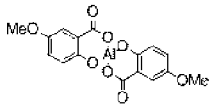 I-24 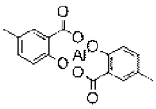 I-20 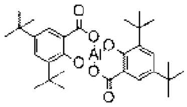 I-25 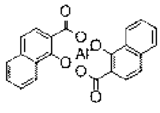 I-21 |
| Cation portion | Anion portion (expressed as I-1-K and the like in Examples) |
| K+ | 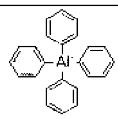 I-17 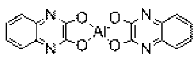 I-22 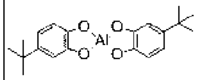 I-18 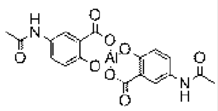 I-23 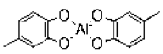 I-19 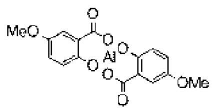 I-24 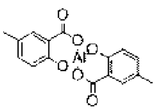 I-20 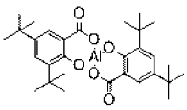 I-25 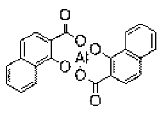 I-21 |

[Table 3]

| Cation portion | Anion portion |
|---|---|
| 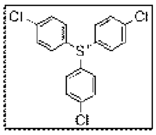 | 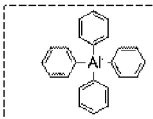<br>I-26<br>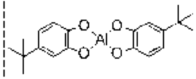<br>I-27<br>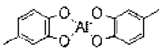<br>I-28<br>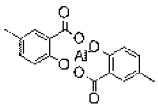<br>I-29<br>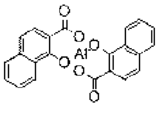<br>I-30<br>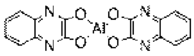<br>I-31<br>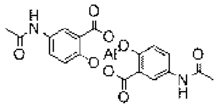<br>I-32<br>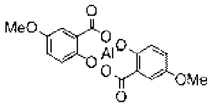<br>I-33<br>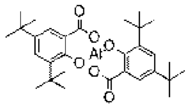<br>I-34<br>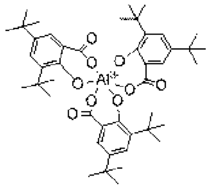<br>I-35<br>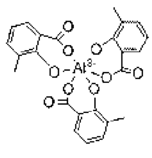<br>I-36<br>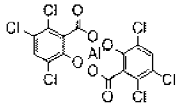<br>I-37<br>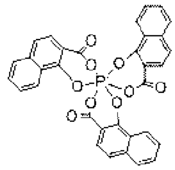<br>I-38<br>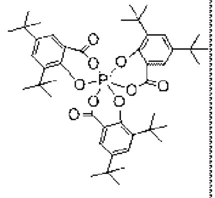<br>I-39 |
| Cation portion | Anion portion (expressed as I-1-TBA and the like in Examples) |
| 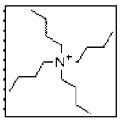 | 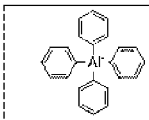<br>I-26<br>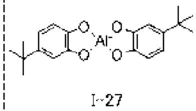<br>I-27<br>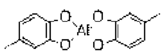<br>I-28<br>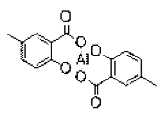<br>I-29<br>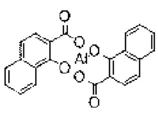<br>I-30<br>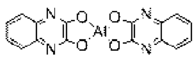<br>I-31<br>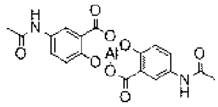<br>I-32<br>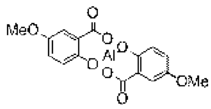<br>I-33<br>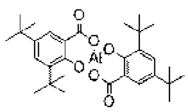<br>I-34<br>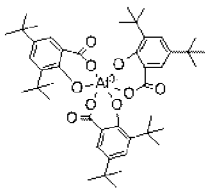<br>I-35<br>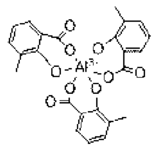<br>I-36<br>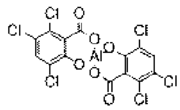<br>I-37<br>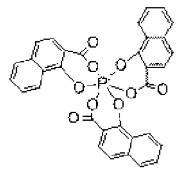<br>I-38<br>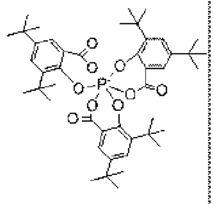<br>I-39 |

The specific compound according to the present invention may be used singly or two or more specific compounds may be jointly used.

In the composition of the embodiment of the present invention, the content of the specific compound significantly varies depending on the structure of the specific compound, an intended effect or use, and the like. Generally, the content is preferably 0.1% to 50% by mass, more preferably 0.5% to 40% by mass, and still more preferably 1% to 30% by mass of the total solid content of the composition. In the present specification, the total solid content refers to the total amount of components in the composition of the embodiment of the present invention excluding a volatile component such as a solvent.

The specific compound according to the present invention exhibits a variety of effects. The composition of the embodiment of the present invention containing the specific compound has a favorable thermal and temporal stability. This is considered to be attributed to the excellent characteristics of the organic anion that constitutes the specific compound, and, even in the case of being compared to the borate anion described in JP2009-538446A, an effect for significantly improving the thermal and temporal stability is admitted. Therefore, lithographic printing plate precursors to which the composition of the embodiment of the present invention is applied also have excellent thermal and temporal stability.

In addition, the composition of the embodiment of the present invention that contains the specific compound is excellent in terms of the electron migration efficiency from an infrared absorber to the specific compound that is attributed to exposure to infrared rays or the photothermal conversion efficiency. Therefore, it is considered that a curing reaction called the polymerization or thermal fusion of a polymerizable compound is accelerated and a favorable curing property is exhibited. Therefore, for example, lithographic printing plates produced from lithographic printing plate precursors to which the composition of the embodiment of the present invention is applied have excellent printing resistance.

Furthermore, the organic anion that constitutes the specific compound is made up of a relatively hydrophilic portion made of an aluminum atom or a phosphorus atom and a relatively hydrophobic portion present in the vicinity of the hydrophilic portion such as an aromatic ring and is thus considered to have a surface activity. Therefore, for example, lithographic printing plate precursors to which the composition of the embodiment of the present invention is applied exhibit favorable on-machine developability.

Furthermore, the organic anion that constitutes the specific compound functions as an acid, and thus, as described below, in the case of jointly using an acid color-developing agent such as a leuco dye in the composition of the embodiment of the present invention, a color-developing image can be formed. The organic anion that constitutes the specific compound is excellent in terms of color-developing performance, and thus, for example, lithographic printing plate precursors to which the composition of the embodiment of the present invention is applied exhibit an excellent plate inspection property.

Furthermore, lithographic printing plate precursors for which a polymerization initiator including well-known $PF_6^-$ as the inorganic anion is jointly used with an acid color-developing agent such as a leuco dye have a problem of the occurrence of ring-shaped color development due to thermal aging. The ring-shaped color development refers to a phenomenon in which fine ring-shaped color development occurs throughout the entire surface of a lithographic printing plate precursor and acts as a drag on a plate inspection operation. Lithographic printing plate precursors for which a polymerization initiator including the organic anion according to the present invention instead of $PF_6^-$ is jointly used with an acid color-developing agent such as a leuco dye have an advantage that ring-shaped color development does not occur due to thermal aging.

The composition of the embodiment of the present invention is preferably a composition in any of the following forms (1) to (3).

A composition in a form (1) includes one or more of the specific compound, an infrared absorber, a binder polymer, and a polymer particle and a polymerizable compound.

A composition in a form (2) includes one or more of the specific compound, an acid color-developing agent, an infrared absorber, a binder polymer, and a polymer particle and a polymerizable compound.

A composition in a form (3) includes one or more of the specific compound, an acid color-developing agent, an infrared absorber, a binder polymer, and a polymer particle, a polymerizable compound, and a polymerization initiator.

The specific compound in the composition of the form (1) is preferably a polymerization initiator in which the counter cation is a diaryliodonium cation or a triarylsulfonium cation.

The specific compound in the composition of the form (2) is preferably a polymerization initiator in which the counter cation is a diaryliodonium cation or a triarylsulfonium cation.

The specific compound in the composition of the form (3) is preferably an additive in which the counter cation is an alkali metal ion, an alkali earth metal ion, or an organic cation having a charge on a nitrogen atom.

Hereinafter, components that are included in the composition of the embodiment of the present invention will be described.

[Infrared absorber]

The composition of the embodiment of the present invention preferably contains an infrared absorber. The infrared absorber has a function of migrating electron and/or migrating energy to a polymerization initiator or the like by being excited by infrared rays. In addition, the infrared absorber has a function of converting the absorbed infrared rays to heat. The infrared absorber preferably has the maximum absorption in a wavelength range of 750 to 1,400 nm. As the infrared absorber, a dye or a pigment is exemplified, and a dye is preferably used.

As the dye, it is possible to use a commercially available dye and a well-known dye described in publications, for example, "Dye Handbooks" (edited by the Society of Synthetic Organic Chemistry, Japan and published on 1970). Specific examples thereof include dyes such as an azo dye, a metal complex azo dye, a pyrazolone azo dye, a naphthoquinone dye, an anthraquinone dye, a phthalocyanine dye, a carbonium dye, a quinoneimine dye, a methine dye, a cyanine dye, a squarylium colorant, a pyrylium salt, and a metal thiolate complex.

Among these dyes, a cyanine colorant, a squarylium colorant, and a pyrylium salt are preferred, a cyanine colorant is more preferred, and an indolenine cyanine colorant is particularly preferred.

Specific examples of the cyanine colorant include a compound described in Paragraphs 0017 to 0019 of JP2001-133969A, Paragraphs 0016 to 0021 of JP2002-023360A, and Paragraphs 0012 to 0037 of JP2002-040638A, preferably a compound described in Paragraphs 0034 to 0041 of JP2002-278057A and Paragraphs 0080 to 0086 of JP2008-195018A, and particularly preferably a compound described in Paragraphs 0035 to 0043 of JP2007-090850A.

In addition, it is also possible to preferably use a compound described in Paragraphs 0008 and 0009 of JP1993-005005A (JP-H05-005005A) and Paragraphs 0022 to 0025 of JP2001-222101A.

As the pigment, a compound described in Paragraphs 0072 to 0076 of JP2008-195018A is preferred.

The infrared absorber may be used singly or two or more infrared absorbers may be jointly used.

The infrared absorber can be added to the composition in a random amount. The content of the infrared absorber is preferably 0.05% to 30% by mass, more preferably 0.1% to 20% by mass, and still more preferably 0.2% to 10% by mass of the total solid content of the composition.

[Polymerizable compound]

The composition of the embodiment of the present invention preferably contains a polymerizable compound. The polymerizable compound may be, for example, a radical polymerizable compound or a cationic polymerizable compound, but is preferably an addition polymerizable compound having at least one ethylenically unsaturated bond (ethylenically unsaturated compound). The ethylenically unsaturated compound is preferably a compound having at least one terminal ethylenically unsaturated bond and more preferably a compound having two or more terminal ethylenically unsaturated bonds. The polymerizable compound may have a chemical form, for example, a monomer, a prepolymer, that is, a dimer, a trimer, or an oligomer, or a mixture thereof.

Examples of the monomer include unsaturated carboxylic acids (for example, acrylic acid, methacrylic acid, itaconic acid, crotonic acid, isocrotonic acid, and maleic acid), esters thereof, and amides thereof, and esters of unsaturated carboxylic acids and polyvalent amine compounds and amides of unsaturated carboxylic acids and polyhydric alcohol compounds are preferably used. In addition, addition reaction product between unsaturated carboxylic acid esters or amides having nucleophilic substituents such as hydroxy groups, amino groups, or mercapto groups and monofunctional or polyfunctional isocyanates or epoxies, dehydration condensation reaction product with monofunctional or polyfunctional carboxylic acids, and the like are also preferably used. In addition, addition reaction product between unsaturated carboxylic acid esters or amides having electrophilic substituents such as isocyanate groups and epoxy groups and monofunctional or polyfunctional alcohols, amines, or thiols, furthermore, substitution reaction product between unsaturated carboxylic acid esters or amides having dissociable substituents such as halogen atoms and tosyloxy groups and monofunctional or polyfunctional alcohols, amines, or thiols are also preferred. In addition, as additional examples, compound groups obtained by substituting the unsaturated carboxylic acids with unsaturated phosphonic acids, styrene, vinyl ethers, or the like can also be used. These compounds are described in JP2006-508380A, JP2002-287344A, JP2008-256850A, JP2001-342222A, JP1997-179296A (JP-H09-179296A), JP1997-179297A (JP-H09-179297A), JP1997-179298A (JP-H09-179298A), JP2004-294935A, JP2006-243493A, JP2002-275129A, JP2003-064130A, JP2003-280187A, JP1998-333321A (JP-H10-333321A), and the like.

As specific examples of monomers of esters of polyhydric alcohol compounds and unsaturated carboxylic acids, examples of acrylic acid esters include ethylene glycol diacrylate, 1,3-butanediol diacrylate, tetramethylene glycol diacrylate, propylene glycol diacrylate, trimethylolpropane triacrylate, hexanediol diacrylate, tetraethylene glycol diacrylate, pentaerythritol tetraacrylate, dipentaerythritol pentacrylate, sorbitol triacrylate, isocyanuric acid ethylene oxide (EO)-modified triacrylate, polyester acrylate oligomers, and the like. Examples of methacrylic acid esters include tetramethylene glycol dimethacrylate, neopentyl glycol dimethacrylate, trimethylolpropane trimethacrylate, ethylene glycol dimethacrylate, pentaerythritol trimethacrylate, bis[p-(3-methacryloxy-2-hydroxypropoxy)phenyl] dimethyl methane, bis[p-(methacryloxyethoxy)phenyl] dimethyl methane, and the like. In addition, specific examples of monomers of amides of polyvalent amine compounds and unsaturated carboxylic acids include methylene bisacrylamide, methylene bismethacrylamide, 1,6-hexamethylene bisacrylamide, 1,6-hexamethylene bismethacrylamide, diethylenetriamine trisacrylamide, xylylene bisacrylamide, xylylene bismethacrylamide, and the like.

In addition, urethane-based addition polymerizable compounds produced using an addition reaction between an isocyanate and a hydroxy group are also preferred, and specific examples thereof include vinyl urethane compounds having two or more polymerizable vinyl groups in one molecule obtained by adding vinyl monomers having a hydroxy group represented by Formula (M) to a polyisocyanate compound having two or more isocyanate groups in one molecule which is described in, for example, JP1973-041708B (JP-S48-041708B).

$$CH_2=C(R^{M4})COOCH_2CH(R^{M5})OH \qquad (M)$$

In Formula (M), $R^{M4}$ and $R^{M5}$ each independently represent a hydrogen atom or a methyl group.

In addition, urethane acrylates described in JP1976-037193A (JP-S51-037193A), JP1990-032293B (JP-H02-032293B), JP1990-016765B (JP-H02-016765B), JP2003-344997A, and JP2006-065210A, urethane compounds having ethylene oxide-based skeletons described in JP1983-049860B (JP-S58-049860B), JP1981-017654B (JP-S56-017654B), JP1987-039417B (JP-S62-039417B), JP1987-039418B (JP-S62-039418B), JP2000-250211A, and JP2007-094138A, and urethane compounds having hydrophilic groups described in US7153632B, JP1996-505958A (JP-H08-505958A), JP2007-293221A, and JP2007-293223A are also preferred.

The details of the structures of the polymerizable compound and the method for using the polymerizable compound such as whether to use the polymerizable compound singly or jointly and the amount of the polymerizable compound added can be randomly set in consideration of the final applications and the like of the composition.

The content of the polymerizable compound is preferably in a range of 5% to 75% by mass, more preferably in a range of 10% to 70% by mass, and still more preferably in a range of 15% to 60% by mass of the total solid content of the composition.

[Polymerization Initiator]

The composition of the embodiment of the present invention preferably contains a polymerization initiator. The polymerization initiator is a compound that generates a polymerization-initiating species such as a radical or a cation with the energy of heat, light, or both, and it is possible to appropriately select from a well-known thermopolymerization initiator, a compound having a bond with a small bond dissociation energy, a photopolymerization initiator, and the like and use it.

The polymerization initiator is preferably an infrared-sensitive polymerization initiator. In addition, the polymerization initiator is preferably a radical polymerization initiator.

Examples of the radical polymerization initiator include an organic halide, a carbonyl compound, an azo compound, an organic peroxide, a metallocene compound, an azide compound, a hexaarylbiimidazole compound, a disulfone compound, an oxime ester compound, and an onium salt compound.

As the organic halide, for example, a compound described in Paragraphs 0022 and 0023 of JP2008-195018A is preferred.

As the carbonyl compound, for example, a compound described in Paragraph 0024 of JP2008-195018A is preferred.

As the azo compound, for example, an azo compound described in JP1996-108621A (JP-H08-108621A) is exemplified.

As the organic peroxide, for example, a compound described in Paragraph 0025 of JP2008-195018A is preferred.

As the metallocene compound, for example, a compound described in Paragraph 0026 of JP2008-195018A is preferred.

As the azide compound, for example, a compound such as 2,6-bis(4-azidobenzylidene)-4-methylcyclohexanone is exemplified.

As the hexaarylbiimidazole compound, for example, a compound described in Paragraph 0027 of JP2008-195018A is preferred.

As the disulfone compound, for example, a compound described in each of JP1986-166544A (JP-S61-166544A) and JP2002-328465A is exemplified.

As the oxime ester compound, for example, a compound described in Paragraphs 0028 to 0030 of JP2008-195018A is preferred.

As the polymerization initiators, from the viewpoint of the curing property, an oxime ester and an onium salt are more preferably exemplified, and onium salts such as an iodonium salt, a sulfonium salt, and an azinium salt are

still more preferably exemplified. In the case of applying the composition of the embodiment of the present invention to a lithographic printing plate precursor, an iodonium salt and a sulfonium salt are particularly preferred. Specific examples of the iodonium salt and the sulfonium salt will be described below, but the present invention is not limited thereto.

An example of the iodonium salt is preferably a diphenyl iodonium salt, particularly, preferably a diphenyl iodonium salt having an electron-donating group as a substituent, for example, a diphenyl iodonium salt substituted with an alkyl group or an alkoxyl group, and preferably an asymmetric diphenyl iodonium salt. Specific examples thereof include diphenyliodonium=hexafluorophosphate, 4-methoxyphenyl-4-(2-methylpropyl)phenyliodonium=hexafluorophosphate, 4-(2-methylpropyl)phenyl-p-tolyliodonium=hexafluorophosphate, 4-hexyloxyphenyl-2,4,6-trimethoxyphenyl iodonium=hexafluorophosphate, 4-hexyloxyphenyl-2,4-diethoxyphenyl iodonium=tetrafluoroborate, 4-octyloxyphenyl-2,4,6-trimethoxyphenyl iodonium= 1 - perfluorobutane sulfonate, 4-octyloxyphenyl-2,4,6-trimethoxyphenyliodonium=hexafluorophosphate, and bis(4-t-butylphenyl)iodonium=hexafluorophosphate.

The sulfonium salts are preferably triarylsulfonium salts, particularly preferably triarylsulfonium salts having an electron-attracting group as a substituent, for example, triarylsulfonium salts in which at least some of groups on the aromatic ring are substituted with a halogen atom, and still more preferably triarylsulfonium salts in which the total number of substituting halogen atoms on the aromatic ring is four or greater. Specific examples thereof include triphenylsulfonium=hexafluorophosphate, triphenylsulfonium=benzoyl formate, bis(4-chlorophenyl)phenylsulfonium=benzoyl formate, bis(4-chlorophenyl)-4-methylphenylsulfonium=tetrafluoroborate, tris(4-chlorophenyl)sulfonium=3,5-bis(methoxycarbonyl)benzenesulfonate, tris(4-chlorophenyl)sulfonium=hexafluorophosphate, and tris(2,4-dichlorophenyl)sulfonium=hexafluorophosphate.

The polymerization initiator may contain an organic anion according to the present invention as an anion. In this case, the polymerization initiator corresponds to the specific compound according to the present invention.

The polymerization initiator may be used singly or two or more polymerization initiators may be jointly used.

The content of the polymerization initiator is preferably 0.1% to 50% by mass, more preferably 0.5% to 30% by mass, and still more preferably 0.8% to 20% by mass of the total solid content of the composition.

[Binder polymer]

In a case in which the composition of the embodiment of the present invention preferably contains a binder polymer. The binder polymer is preferably a polymer having a film property, and it is possible to preferably use well-known binder polymers that are used in the composition. Among them, as the binder polymer, a (meth)acrylic resin, a polyvinyl acetal resin, and a polyurethane resin are preferred.

In a case in which the composition of the embodiment of the present invention is applied to an image-recording layer in a lithographic printing plate precursor, as the binder polymer, it is possible to preferably use well-known binder polymers that can be used in the image-recording layer in the lithographic printing plate precursor. As an example, a binder polymer that is used for an on-machine development-type lithographic printing plate precursor (hereinafter, also referred to as the binder polymer for on-machine development) will be described in detail.

As the binder polymer for on-machine development, a binder polymer having an alkylene oxide chain is preferred. The binder polymer having an alkylene oxide chain may have a poly(alkylene oxide) portion in a main chain or in a side chain. In addition, the binder polymer may be a graft polymer having poly(alkylene oxide) in a side chain or a block copolymer of a block constituted of a poly(alkylene oxide)-containing repeating unit and a block constituted of an (alkylene oxide)-non-containing repeating unit.

In the case of having a poly(alkylene oxide) portion in the main chain, the binder polymer is preferably a polyurethane resin. As a polymer in the main chain in a case in which the binder polymer has a poly(alkylene oxide) portion in the side chain, a (meth)acrylic resin, a polyvinyl acetal resin, a polyurethane resin, a polyurea resin, a polyimide resin, a polyamide resin, an epoxy resin, a polystyrene resin, a novolac-type phenol resin, a polyester resin, synthetic rubber, and natural rubber are exemplified, and, particularly, a (meth)acrylic resin is preferred.

The alkylene oxide is preferably alkylene oxide having 2 to 6 carbon atoms and particularly preferably ethylene oxide or propylene oxide.

The number of times of repetition of the alkylene oxide in the poly(alkylene oxide) portion is preferably 2 to 120, more preferably 2 to 70, and still more preferably 2 to 50.

In a case in which the number of times of repetition of the alkylene oxide is 120 or less, neither the printing resistance against wear nor the printing resistance against the ink-receiving property degrades, which is preferable.

The poly(alkylene oxide) portion is preferably contained in a form of a structure represented by Formula (AO) as the side chain of the binder polymer and more preferably contained in a form of the structure represented by Formula (AO) as the side chain of the (meth)acrylic resin.

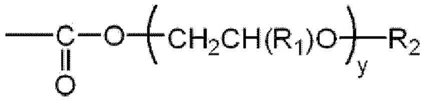 ( AO )

In Formula (AO), y represents 2 to 120, $R_1$ represents a hydrogen atom or an alkyl group, and $R_2$ represents a hydrogen atom or a monovalent organic group.

The monovalent organic group is preferably an alkyl group having 1 to 6 carbon atoms. Specific examples thereof include a methyl group, an ethyl group, an n-propyl group, an isopropyl group, an n-butyl group, a sec-butyl group, an isobutyl group, a tert-butyl group, an n-pentyl group, an isopentyl group, a neopentyl group, an n-hexyl group, an isohexyl group, a 1,1-dimethylbutyl group, a 2,2-dimethylbutyl group, a cyclopentyl group, and a cyclohexyl group.

In Formula (AO), y is preferably 2 to 70 and more preferably 2 to 50. $R_1$ is preferably a hydrogen atom or a methyl group and particularly preferably a hydrogen atom. $R_2$ is particularly preferably a hydrogen atom or a methyl group.

The binder polymer may have a crosslinking property in order to improve the membrane hardness of an image area. In order to provide a crosslinking property to the polymer, a crosslinking functional group such as an ethylenically unsaturated bond may be introduced to a main chain or a side chain of a polymer. The crosslinking functional group may be introduced by copolymerization or may be introduced by a polymer reaction.

Examples of a polymer having an ethylenically unsaturated bond in the main chain of the molecule include poly-1,4-butadiene, poly-1,4-isoprene, and the like.

Examples of a polymer having an ethylenically unsaturated bond in the side chain of the molecule include polymers that are an ester or an amide of acrylic acid or methacrylic acid and in which a residue (R in -COOR or -CONHR) of the ester or the amide is a polymer having an ethylenically unsaturated bond.

Examples of the residue (the R) having an ethylenically unsaturated bond can include - $(CH_2)_nCR^{1A}{=}CR^{2A}R^{3A}$, $-(CH_2O)_nCH_2CR^{1A}{=}CR^{2A}R^{3A}$, $-(CH_2CH_2O)_nCH_2CR^{1A}{=}CR^{2A}R^{3A}$, - $(CH_2)_nNH\text{-}CO\text{-}O\text{-}CH_2CR^{1A}{=}CR^{2A}R^{3A}$, $-(CH_2)_n\text{-}O\text{-}CO\text{-}CR^{1A}{=}CR^{2A}R^{3A}$, and $-(CH_2CH_2O)_2\text{-}X^A$ (in the formulae, $R^{A1}$ to $R^{A3}$ each independently represent a hydrogen atom, a halogen atom, an alkyl group having 1 to 20 carbon atoms, an aryl group, an alkoxy group, or an aryloxy group, and $R^{A1}$ and $R^{A2}$ or $R^{A3}$ may be bonded to each other to form a ring. n represents an integer of 1 to 10. $X^A$ represents a dicyclopentadienyl residue.).

Specific examples of an ester residue include $-CH_2CH{=}CH_2$, $-CH_2CH_2O\text{-}CH_2CH{=}CH_2$, $-CH_2C(CH_3){=}CH_2$, $-CH_2CH{=}CH\text{-}C_6H_5$, $-CH_2CH_2OCOCH{=}CH\text{-}C_6H_5$, $-CH_2CH_2\text{-}NHCOO\text{-}CH_2CH{=}CH_2$, and $-CH_2CH_2O\text{-}X$ (in the formula, X represents a dicyclopentadienyl residue.).

Specific examples of an amide residue include $-CH_2CH{=}CH_2$, $-CH_2CH_2\text{-}Y$ (in the formula, Y represents a cyclohexene residue.), and $-CH_2CH_2\text{-}OCO\text{-}CH{=}CH_2$.

The binder polymer having a crosslinking property is cured as follows: for example, a free radical (a polymerization initiation radical or a growth radical in a polymerization process of a polymerizable compound) is added to the crosslinking functional group, addition polymerization occurs between polymer molecules directly or through the polymerization chain of the polymerizable compound, and a crosslink is formed between the polymer molecules, whereby the polymer is cured. Alternatively, an atom in the polymer (for example, a hydrogen atom on a carbon atom adjacent to the crosslinking functional group) is pulled off by a free radical, polymer radicals are generated, and the polymer radicals are bonded to each other, whereby a crosslink is formed between the polymer molecules, and the polymer is cured.

The content of the crosslinking group in the binder polymer (the content of an unsaturated double bond that is radical polymerizable by iodimetry) is preferably 0.1 to 10.0 mmol, more preferably 1.0 to 7.0 mmol, and still more preferably 2.0 to 5.5 mmol per gram of the binder polymer from the viewpoint of a favorable sensitivity and a favorable storage stability.

Hereinafter, specific examples 1 to 11 of the binder polymer will be illustrated, but the present invention is not limited thereto. In the following exemplary compounds, numerical values described together with individual repeating units (numerical values described together with main chain repeating units) represent the molar percentages of the repeating units. Numerical values described together with side chain repeating units represent the number of times of repetition of the repeating portions. In addition, Me represents a methyl group, Et represents an ethyl group, and Ph represents a phenyl group.

(1) 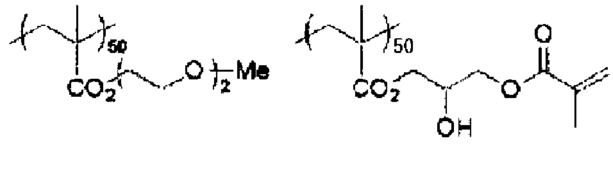

(2) 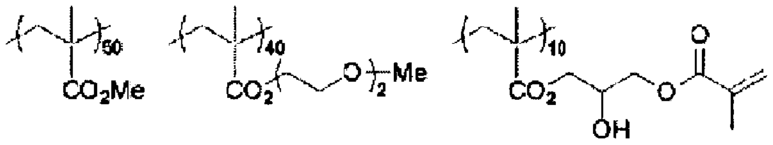

(3) 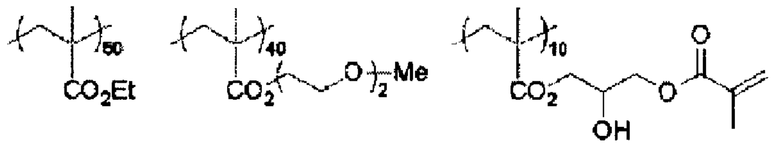

(4) 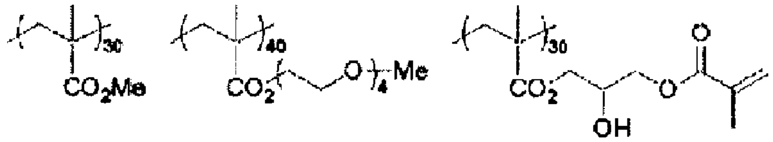

(5) 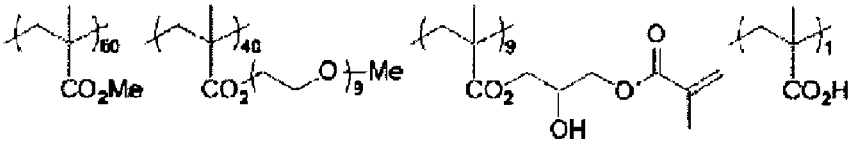

(6) 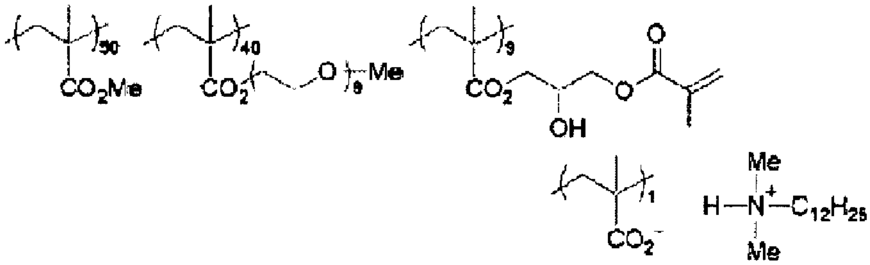

(7) 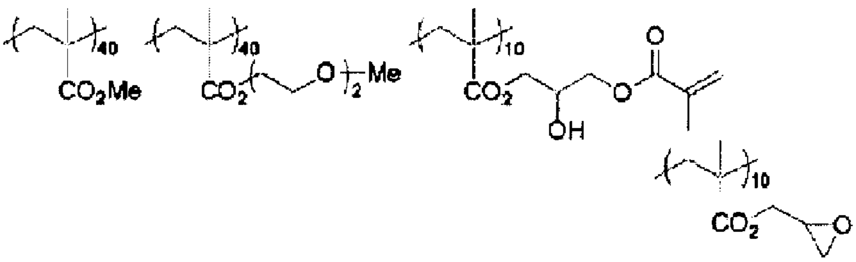

(8) 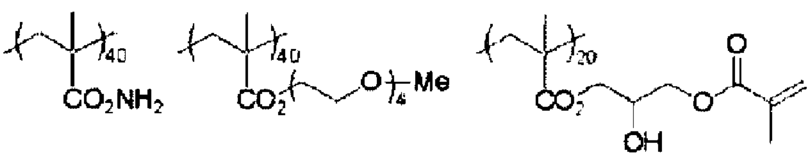

(9) 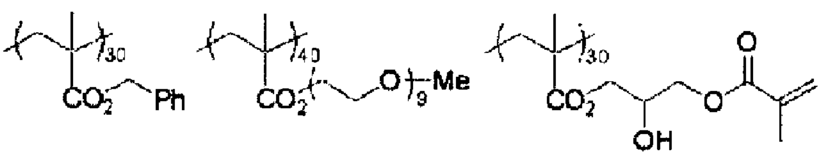

(10) 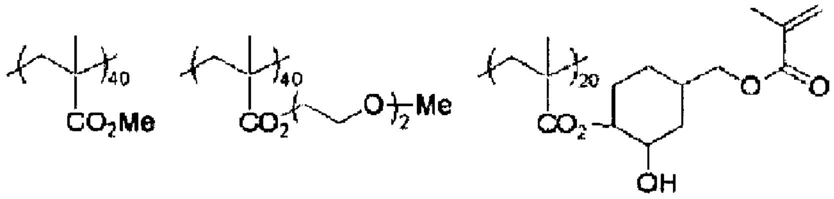

(11) 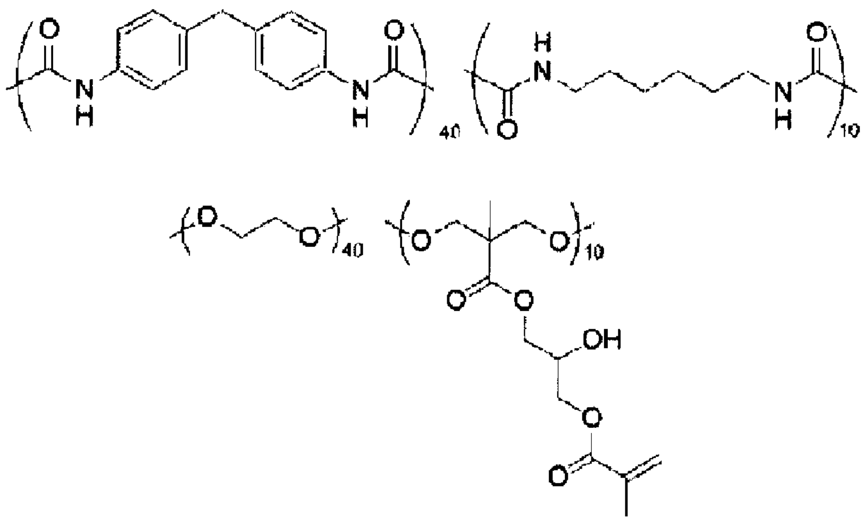

Regarding the molecular weight of the binder polymer, the weight-average molecular weight (Mw) as a polystyrene equivalent value by a GPC method is 2,000 or more, preferably 5,000 or more, and more preferably 10,000 to 300,000.

In addition, in the present invention, an oligomer refers to a substance having Mw of 800 or more and less than 2,000, and a polymer refers to a substance having Mw of 2,000 or more.

If necessary, it is possible to jointly use a hydrophilic polymer such as polyacrylic acid or polyvinyl alcohol described in JP2008-195018A. In addition, it is also possible to jointly use a lipophilic polymer and a hydrophilic polymer.

In a case in which the composition of the embodiment of the present invention is applied to the image-recording layer in the lithographic printing plate precursor, the binder polymer may be present as a polymer that functions as a binder of the respective components or may be present in a particle shape in the composition. In a case in which the binder polymer is present in a particle shape, the volume average primary particle diameter is preferably 10 to 1,000 nm, more preferably 20 to 300 nm, and still more preferably 30 to 120 nm.

In the present invention, the volume average primary particle diameter is obtained by capturing an electron micrograph of particles, measuring the particle diameters of a total of 5,000 particles on the photograph, and computing the arithmetical average value.

For a non-spherical particle, the particle diameter value of a spherical particle having the same particle area as the particle area on the photograph was measured as the particle diameter (circle-equivalent diameter).

The above-described method for measuring the volume average primary particle diameter shall apply to the particle of any substances other than the binder polymer which is present in a particle shape as long as there is no special description.

The binder polymer may be used singly or two or more binder polymers may be jointly used.

The binder polymer can be added to the composition in a random amount. The content of the binder polymer can be appropriately selected depending on the application or the like of the composition of the embodiment of the present invention, but is preferably 1% to 90% by mass and more preferably 5% to 80% by mass of the total solid content of the composition.

[Acid color-developing agent]

The composition of the embodiment of the present invention may contain an acid color-developing agent. The acid color-developing agent is a compound having a property of developing color by receiving an electron-receiving compound (for example, a proton such as an acid). The acid color-developing agent is preferably a colorless compound which has a partial skeleton of lactone, lactam, a sultone, a spiropyran, an ester, an amide, or the like and in which these

partial skeletons are ring-opened or cleaved in a case in which the compound comes into contact with an electron-receiving compound.

Examples of the above-described acid color-developing agent include phthalides such as 3,3-bis(4-dimethylaminophenyl)-6-dimethylaminophthalide (referred to as "crystal violet lactone"), 3,3-bis(4-dimethylaminophenyl) phthalide, 3-(4-dimethylaminophenyl)-3-(4-diethylamino-2-methylphenyl)-6-dimethylaminophthalide, 3-(4-dimethylaminophenyl)-3-(1,2-dimethylindol-3-yl) phthalide, 3-(4-dimethylaminophenyl)-3-(2-methylindol-3-yl) phthalide, 3,3-bis(1,2-dimethylindol-3-yl)-5-dimethylaminophthalide, 3,3-bis(1,2-dimethylindol-3-yl)-6-dimethylaminophthalide, 3,3-bis(9-ethylcarbazol-3-yl)-6-dimethylaminophthalide, 3,3-bis(2-phenylindol-3-yl)-6-dimethylaminophthalide, 3-(4-dimethylaminophenyl)-3-(1-methylpyrrole-3-yl)-6-dimethylaminophthalide,

3,3-bis[1,1-bis(4-dimethylaminophenyl)ethylene-2-yl]-4,5,6,7-tetrachlorophthalide, 3,3-bis[1,1-bis(4-pyrrolidinophenyl) ethylene-2-yl]-4,5,6,7-tetrabromophthalide, 3,3-bis[1-(4-dimethylaminophenyl)-1-(4-methoxyphenyl) ethylene-2-yl]-4,5,6,7-tetrachlorophthalide, 3,3-bis[1-(4-pyrrolidinophenyl)-1-(4-methoxyphenyl) ethylene-2-yl]-4,5,6,7-tetrachlorophthalide, 3-[1,1-di(1-ethyl-2-methylindol-3-yl) ethylene-2-yl]-3-(4-diethylaminophenyl)phthalide, 3-[1,1-di(1-ethyl-2-methylindol-3-yl)ethylene-2-yl]-3-(4-N-ethyl-N-phenylaminophenyl) phthalide, 3-(2-ethoxy-4-diethylaminophenyl)-3-(1-n-octyl-2-methylindol-3-yl)-phthalide, 3,3-bis(1-n-octyl-2-methylindol-3-yl)-phthalide,and 3-(2-methyl-4-diethylaminophenyl)-3-(l-n-octyl-2-methylindol-3-yl) -phthalide,

4,4-bis-dimethylaminobenzhydrin benzyl ether, N-halophenyl-leucoauramine, N-2,4,5-trichlorophenylleucoauramine, rhodamine-B-anilinolactam, rhodamine-(4-nitroanilino) lactam, rhodamine-B-(4-chloroanilino) lactam, 3,7-bis(diethylamino)-10-benzoylphenoxazine, benzoyl leuco methylene blue, 4-nitrobenzoyl methylene blue,

fluoranes such as 3,6-dimethoxyfluoran, 3-dimethylamino-7-methoxyfluoran, 3-diethylamino-6-methoxyfluoran, 3-diethylamino-7-methoxyfluoran, 3-diethylamino-7-chlorofluoran, 3-diethylamino-6-methyl-7-chlorofluoran, 3-diethylamino-6,7-dimethylfluoran, 3-N-cyclohexyl-N-n-butylamino-7-methylfluoran, 3-diethylamino-7-dibenzylaminofluoran, 3-diethylamino-7-octylaminofluoran, 3-diethylamino-7-di-n-hexylaminofluoran, 3-diethylamino-7-anilinofluoran, 3-diethylamino-7-(2'-fluorophenylamino)fluoran, 3-diethylamino-7-(2'-chlorophenylamino)fluoran, 3-diethylamino-7-(3 '-chlorophenylamino)fluoran, 3-diethylamino-7-(2',3'-dichlorophenylamino)fluoran, 3-diethylamino-7-(3' - trifluoromethylphenylamino)fluoran, 3-di-n-butylamino-7-(2'-fluorophenylamino)fluoran, 3-di-n-butylamino-7-(2'-chlorophenylamino)fluoran, 3-N-isopentyl-N-ethylamino-7-(2'-chlorophenylamino)fluoran,

3-N-n-hexyl-N-ethylamino-7-(2'-chlorophenylamino)fluorane, 3-diethylamino-6-chloro-7-anilinofluorane, 3-di-n-butylamino-6-chloro-7-anilinofluorane, 3-diethylamino-6-methoxy-7-anilinofluorane, 3-di-n-butylamino-6-ethoxy-7-anilinofluorane, 3-pyrrolidino-6-methyl-7-anilinofluorane, 3-piperidino-6-methyl-7-anilinofluorane, 3-morpholino-6-methyl-7-anilinofluorane, 3-dimethylamino-6-methyl-7-anilinofluorane, 3-diethylamino-6-methyl-7-anilinofluorane, 3-di-n-butylamino-6-methyl-7-anilinofluorane, 3-di-n-pentylamino-6-methyl-7-anilinofluorane, 3-N-ethyl-N-methylamino-6-methyl-7-anilinofluorane, 3-Nn-propyl-N-methylamino-6-methyl-7-anilinofluorane, 3-N-n-propyl-N-ethylamino-6-methyl-7-anilinofluorane, 3-N-n-butyl-N-methylamino-6-methyl-7-anilinofluorane, 3-N-n-butyl-N-ethylamino-6-methyl-7-anilinofluorane, 3-N-isobutyl-N-methylamino-6-methyl-7-anilinofluorane, 3-N-isobutyl-N-ethylamino-6-methyl-7-anilinofluorane, 3-N-isopentyl-N-ethylamino-6-methyl-7-anilinofluorane, 3-N-n-hexyl-N-methylamino-6-methyl-7-anilinofluorane, 3-N-cyclohexyl-N-ethylamino-6-methyl-7-anilinofluorane, 3-N-cyclohexyl-N-n-propylamino-6-methyl-7-anilinofluorane, 3-N-cyclohexyl-N-n-butylamino-6-methyl-7-anilinofluorane, 3-N-cyclohexyl-N-n-hexylamino-6-methyl-7-anilinofluorane, 3-N-cyclohexyl-3-n-octylamino-6-methyl-7-anilinofluorane,

3-N-(2'-methoxyethyl)-N-methylamino-6-methyl-7-anilinofluorane, 3-N-(2'-methoxyethyl)-N-ethylamino-6-methyl-7-anilinofluorane, 3-N-(2'-methoxyethyl)-N-isobutylamino-6-methyl-7-anilinofluorane, 3-N-(2'-ethoxyethyl)-N-methylamino-6-methyl-7-anilinofluorane, 3-N-(2'-ethoxyethyl)-N-ethylamino-6-methyl-7-anilinofluorane, 3-N-(3'-methoxypropyl)-N-methylamino-6-methyl-7-anilinofluorane, 3-N-(3'-methoxypropyl)-N-ethylamino-6-methyl-7-anilinofluorane, 3-N-(3' -ethoxypropyl)-N-methylamino-6-methyl-7-anilinofluorane, 3-N-(3'-ethoxypropyl)-N-ethylamino-6-methyl-7-anilinofluorane, 3-N-(2'-tetrahydrofurfuryl)-N-ethylamino-6-methyl-7-anilinofluorane, 3-N-(4'-methylphenyl)-N-ethylamino-6-methyl-7-anilinofluorane, 3-diethylamino-6-ethyl-7-anilinofluorane, 3-diethylamino-6-methyl-7-(3' -methylphenylamino)fluorane, 3 -diethylamino-6-methyl-7-(2',6'-dimethylphenylamino)fluorane, 3-di-n-butylamino-6-methyl-7-(2',6'-dimethylphenylamino)fluorane, 3-di-n-butylamino-7-(2',6'-dimethylphenylamino)fluorane, 2,2-bis[4'-(3-N-cyclohexyl-N-methylamino-6-methylfluorane)-7-ylaminophenyl]propane, 3-[4' -(4-phenylaminophenyl)aminophenyl]amino-6-methyl-7-chlorofluorane, and 3-[4'-(dimethylaminophenyl)]amino-5,7-dimethylfluoran,

phthalides such as 3-(2-methyl-4-diethylaminophenyl)-3-(1-ethyl-2-methylindol-3-yl)-4-azaphthalide, 3-(2-n-propoxycarbonylamino-4-di-n-propylaminophenyl)-3-(1-ethyl-2-methylindol-3-yl)-4-azaphthalide, 3-(2-methylamino-4-di-n-propylaminophenyl)-3-(1-ethyl-2-methylindol-3-yl)-4-azaphthalide, 3-(2-methyl-4-di-n-hexylaminophenyl)-3-(1-n-octyl-2-methylindole-3-yl)-4,7-diazaphthalide, 3,3-bis(2-ethoxy-4-diethylaminophenyl)-4-azaphthalide, 3,3-bis(1-n-octyl-2-methylindole-3-yl)-4-azaphthalide, 3-(2-ethoxy-4-diethylaminophenyl)-3-(1-ethyl-2-methylindol-3-yl)-4-azaphthalide, 3-(2-ethoxy-4-diethylaminophenyl)-3-(1-octyl-2-methylindol-3-yl)-4or 7-azaphthalide, 3-(2-ethoxy-4-diethylaminophenyl)-3-(1-ethyl-2-methylindol-3-yl)-4 or 7-azaphthalide, 3-(2-hexyloxy-4-diethylaminophenyl)-3-(1-ethyl-2-methylindol-3-yl)-4 or 7-azaphthalide 3-(2-ethoxy-4-diethylaminophenyl)-3-(1-ethyl-2-phenylindol-3-yl)-4 or 7-azaphthalide, 3-(2-butoxy-4-diethylaminophenyl)-3-(1-ethyl-2-phenylindol-3-yl)-4 or 7-azaphthalide, 3-methyl-spiro-dinaphthopyran, 3-ethyl-spiro-dinaphthopyran, 3-phenyl-spiro-dinaphthopyran, 3-benzyl-spiro-dinaphthopyran, 3-methyl-naphtho-(3-methoxybenzo)spiropyran, 3-propyl-spiro-dibenzopyran-3,6-bis(dimethylamino)fluorene-9-spiro-3'-(6'-dimethylamino)phthalide, and 3,6-bis(diethylamino)fluoren-9-spiro-3'-(6'-dimethylamino)phthalide,
furthermore, 2'-anilino-6'-(N-ethyl-N-isopentyl)amino-3'-methylspiro[isobenzofuran-1 (3H), 9'-(9H) xanthen-3-one, 2'-anilino-6'-(N-ethyl-N-(4-methylphenyl))amino-3'-methylspiro[isobenzofuran-1(3H), 9'-(9H) xanthene]-3-one, 3'-N,N-dibenzylamino-6'-N,N-diethylaminospiro[isobenzofuran-1(3H), 9'-(9H) xanthene]-3-one, 2'-(N-methyl-N-phenyl)amino-6'-(N-ethyl-N-(4-methylphenyl))aminospiro[isobenzofuran-1(3H), 9'-(9H) xanthene]-3-one, and the like are exemplified.

The acid color-developing agent is preferably at least one compound selected from the group consisting of a spiropyran compound, a spirooxazine compound, a spirolactone compound, or a spirolactam compound.

The hue of the colorant after color development is preferably green, blue, or black from the viewpoint of visibility.

As the acid color-developing agent, it is also possible to use commercially available products. For example, ETAC, RED 500, RED 520, CVL, S-205, BLACK 305, BLACK 400, BLACK 100, BLACK 500, H-7001, GREEN 300, NIRBLACK 78, BLUE 220, H-3035, BLUE 203, ATP, H-1046, H-2114 (all manufactured by Fukui Yamada Chemical Co., Ltd.), ORANGE-DCF, Vermilion-DCF, PINK-DCF, RED-DCF, BLMB, CVL, GREEN-DCF, TH-107 (all manufactured by Hodogaya Chemical Co., Ltd.), ODB, ODB-2, ODB-4, ODB-250, ODB-BlackXV, Blue-63, Blue-502, GN-169, GN-2, Green-118, Red-40, Red-8 (all manufactured by Yamamoto Chemicals Inc.), crystal violet lactone (manufactured by Tokyo Chemical Industry Co., Ltd.), and the like. Among these commercially available products, ETAC, S-205, BLACK 305, BLACK 400, BLACK 100, BLACK 500, H-7001, GREEN 300, NIRBLACK 78, H-3035, ATP, H-1046, H-2114, GREEN-DCF, Blue-63, GN-169, crystal violet lactone are preferred since the color development characteristic in exposure to infrared rays is favorable.

The acid color-developing agent may be used singly or two or more acid color-developing agents may be jointly used.

The content of the acid color-developing agent is preferably 0.1% to 20% by mass, more preferably 1% to 15% by mass, and still more preferably 2% to 10% by mass of the total solid content of the composition of the embodiment of the present invention.

The acid color-developing agent develops color by being jointly used with an acid-generating agent. The acid-generating agent is a compound that generates an acid by the migration of electrons and/or the migration of energy from the infrared absorber excited by infrared rays. The generated acid reacts with the acid color-developing agent, whereby color is developed. As an acid to be generated, sulfonic acid, hydrochloric acid, hexafluorophosphoric acid, tetrafluoroboric acid, and the like are useful.

As the acid-generating agent, onium salts such as iodonium salts, sulfonium salts, phosphonium salts, diazonium salts, and azinium salts are exemplified. Specifically, compounds described in the specification of US4,708,925A, JP1995-020629A (JP-H07-020629A), and JP2008-195018A can be exemplified. In addition, benzyl sulfonates described in the specification of US5,135,838A or US5,200,544A are also preferred. Furthermore, active sulfonic acid esters described in JP1990-100054A (JP-H02-100054A), JP1990-100055A (JP-H02-100055A), and JP1997-197671A (JP-H09-197671A), imide esters such as sulfonic acid esters of N-hydroxyimide compounds described in JP2008-001740A, or disulfone compounds described in JP1986-166544A (JP-S61-166544A), JP2003-328465A, and the like are also preferred. In addition, oxime ester compounds described in J. C. S. Perkin II (1979) 1653 to 1660, J. C. S. Perkin II (1979) 156 to 162, Journal of Photopolymer Science and Technology (1995) 202 to 232, JP2000-066385A, JP2000-080068A, and JP2008-195018A are also preferred. Additionally, haloalkyl-substituted s-triazine compounds described in JP1995-271029A (JP-H07-271029A) are also preferred.

As the acid-generating agent, the iodonium salts, the sulfonium salts, and the azidium salts are particularly preferred.

Regarding the iodonium salts and the sulfonium salts, it is possible to incorporate the description of the iodonium salts and the sulfonium salts in the section of the polymerization initiator.

As examples of the azinium salts, 1-cyclohexylmethyloxypyridinium=hexafluorophosphate, 1-cyclohexyloxy-4-phenylpyridinium=hexafluorophosphate, 1-ethoxy-4-phenylpyridinium=hexafluorophosphate, 1-(2-ethylhexyloxy)-4-phenylpyridinium=hexafluorophosphate, 4-chloro-1-cyclohexylmethyloxypyridinium=hexafluorophosphate, 1-ethoxy-4-cyanopyridinium=hexafluorophosphate, 3,4-dichloro-1-(2-ethylhexyloxy)pyridinium=hexafluorophosphate, 1-benzyl oxy-4-phenylpyridinium=hexafluorophosphate, 1-phenethyloxy-4-phenylpyridinium=hexafluorophosphate, 1-(2-ethylhexyloxy)-4-phenylpyridinium=p-toluenesulfonate, 1-(2-ethylhexyloxy)-4-phenylpyridinium=perfluorobutanesulfonate, 1-(2-ethylhexyloxy)-4-phenylpyridinium=bromide, and 1-(2-ethylhexyloxy)-4-phenylpyridinium=tetrafluoroborate are exemplified.

The acid-generating agent may contain the organic anion according to the present invention as an anion. In this case, the acid-generating agent corresponds to the specific compound according to the present invention.

The acid-generating agent may be used singly or two or more acid-generating agents may be jointly used.

The content of the acid-generating agent is preferably 1 to 30% by mass, more preferably 3 to 20% by mass,

and still more preferably 6 to 15% by mass of the total solid content of the composition of the embodiment of the present invention.

[Radical production aid]

The composition of the embodiment of the present invention may contain a radical production aid. The radical production aid contributes to the improvement of the printing resistance of lithographic printing plates produced from lithographic printing plate precursors in a case in which the composition of the embodiment of the present invention is applied to image-recording layers in the lithographic printing plate precursors. Examples of the radical production aid include five kinds of radical production aids described below.

(i) Alkyl or arylate complexes: It is considered that carbon-hetero bonds are oxidatively cleaved and active radicals are generated. Specific examples thereof include borate compounds and the like.
(ii) Amino acetate compounds: It is considered that C-X bonds on carbon adjacent to nitrogen are cleaved due to oxidation and active radicals are generated. X is preferably a hydrogen atom, a carboxy group, a trimethylsilyl group, or a benzyl group. Specific examples thereof include N-phenylglycines (which may have a substituent in a phenyl group), N-phenyl iminodiacetic acids (which may have a substituent in a phenyl group), and the like.
(iii) Sulfur-containing compounds: The above-described amino acetate compounds in which a nitrogen atom is substituted with a sulfur atom are capable of generating active radicals by means of the same action. Specific examples thereof include phenylthioacetic acids (which may have a substituent in a phenyl group) and the like.
(iv) Tin-containing compounds: The above-described amino acetate compounds in which a nitrogen atom is substituted with a tin atom are capable of generating active radicals by means of the same action.
(v) Sulfinates: Active radicals can be generated by means of oxidation. Specific examples thereof include sodium aryl sulfinate and the like.

Among these radical production aids, a borate compound is preferred. The borate compound is preferably a tetraaryl borate compound or a monoalkyltriaryl borate compound, more preferably a tetraaryl borate compound from the viewpoint of the stability of the compound.
A counter cation in the borate compound is preferably an alkali metal ion or a tetraalkyl ammonium ion and more preferably a sodium ion, a potassium ion, or a tetrabutylammonium ion.
Specific examples of the borate compound include compounds illustrated below. Here, $X_c^+$ represents a monovalent cation and is preferably an alkali metal ion or a tetraalkyl ammonium ion and more preferably an alkali metal ion or a tetrabutylammonium ion. In addition, Bu represents an n-butyl group.

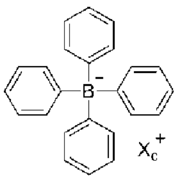
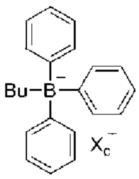
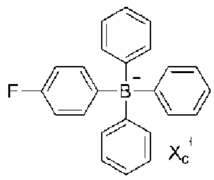
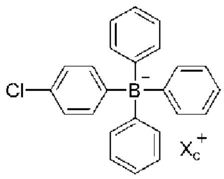

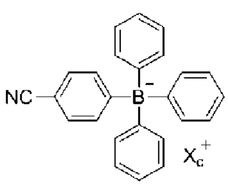
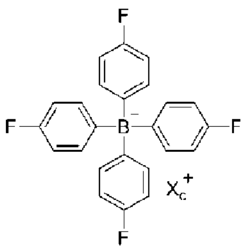
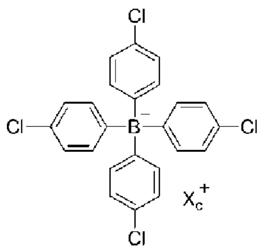

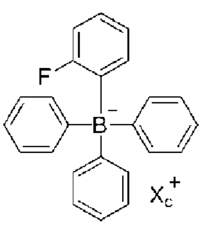
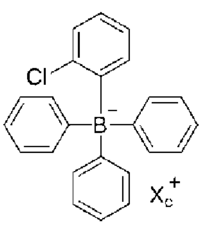
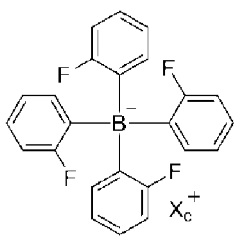

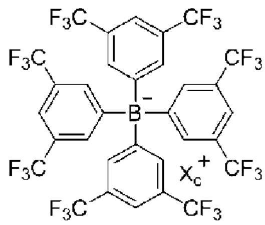

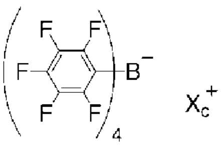

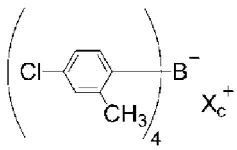

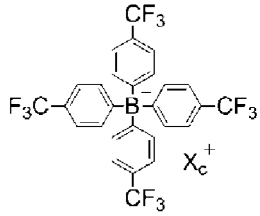

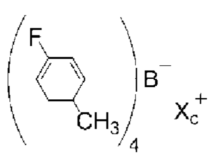

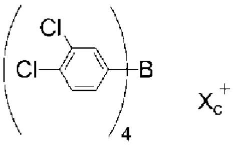

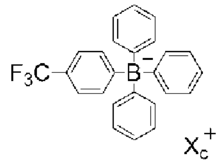

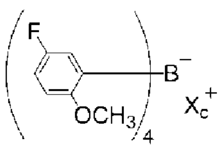

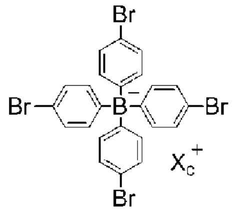

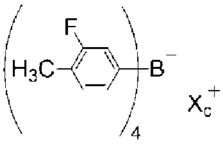

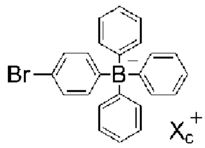

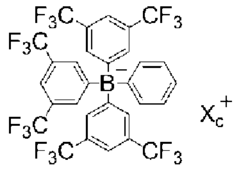

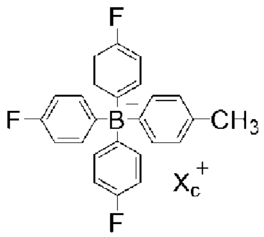

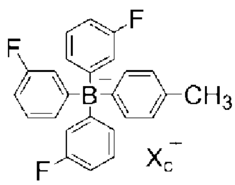

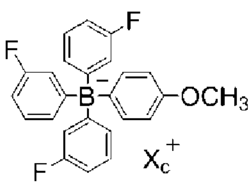

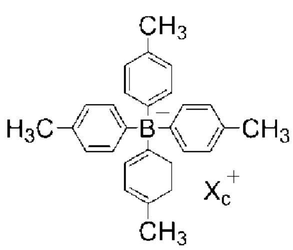

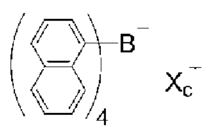

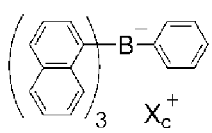

The radical production aid may be used singly or two or more radical production aids may be jointly used.

The content of the radical production aid is preferably 0.01% to 30% by mass, more preferably 0.05% to 25% by mass, and still more preferably 0.1% to 20% by mass of the total solid content of the composition of the embodiment of the present invention.

[Polymer particle]

In a case in which the composition of the embodiment of the present invention is applied to an image-recording layer of a lithographic printing plate precursor, from the viewpoint of improving the on-machine developability of the lithographic printing plate precursor, the composition according to the embodiment of the present invention may contain a polymer particle. The polymer particle is preferably a polymer particle capable of converting the image-recording layer to be hydrophobic in the case of being irradiated with heat, preferably, heat generated by exposure.

The polymer particle is preferably at least one selected from a thermally adhesive particle, a thermally reactive polymer particle, a polymer particle having a polymerizable group, a microcapsule including a hydrophobic compound, or a micro gel (crosslinking polymer particle). Among these, a polymer particle having a polymerizable group and a micro gel are preferred.

Preferred examples of the thermally adhesive particle include a thermoplastic polymer particle described in Research Disclosure No. 33303 of January 1992 and the specifications of JP1997-123387A (JP-H09-123387A), JP1997-131850A (JP-H09-131850A), JP1997-171249A (JP-H09-171249A), JP1997-171250A (JP-H09-171250A), and EP931647B.

Specific examples of polymers that constitute the thermally adhesive particle include homopolymers or copolymers of monomers of ethylene, styrene, vinyl chloride, methyl acrylate, ethyl acrylate, methyl methacrylate, ethyl methacrylate, vinylidene chloride, acrylonitrile, vinylcarbazole, acrylates or methacrylates having polyalkylene structures, and the like and mixtures thereof. Preferred examples thereof include copolymers having polystyrene, styrene, and acrylonitrile and polymethyl methacrylate. The number-average primary particle diameter of the thermally adhesive particles is preferably in a range of 0.01 to 2.0 μm.

Examples of the thermally reactive polymer particle include a polymer particle having a thermally reactive group. The polymer particle having a thermally reactive group forms a hydrophobilized region through crosslinking by a thermal reaction and a change in a functional group at this time.

The thermally reactive group in the polymer particle having a thermally reactive group may be a functional group that causes any reactions as long as chemical bonds are formed, but is preferably a polymerizable group. Preferred examples thereof include ethylenically unsaturated groups that cause radical polymerization reactions (for example, acryloyl groups, methacryloyl groups, vinyl groups, allyl groups, and the like), cationic polymerizable groups (for example, vinyl groups, vinyloxy groups, epoxy groups, oxetanyl groups, and the like), isocyanato groups that cause addition reactions or blocked bodies thereof, epoxy groups, vinyloxy groups, functional groups having active hydrogen atoms that are reaction partners thereof (for example, amino groups, hydroxy groups, carboxy groups, and the like), carboxy groups that cause condensation reactions, hydroxy groups or amino groups that are reaction partners, acid anhydrides that cause ring-opening addition reactions, amino groups or hydroxy groups which are reaction partners, and the like.

Examples of the microcapsules include microcapsules including all or part of the constituent components of the image-recording layer as described in JP2001-277740A and JP2001-277742A. The constituent components of the image-recording layer can also be added outside the microcapsules. A preferred aspect of the image-recording layer including the microcapsules is an image-recording layer including hydrophobic constituent components in the microcapsules and including hydrophilic constituent components outside the microcapsules.

Micro gels (crosslinking polymer particles) are capable of containing some of the constituent components of the composition of the embodiment of the present invention in at least one of the inside or surface thereof, and particularly, an aspect of micro capsules that have radical polymerizable groups on the surfaces and thus turn into reactive micro gels is preferred from the viewpoint of image-forming sensitivity or printing resistance.

In order to put the constituent components of the composition of the embodiment of the present invention into microcapsules or micro gels, well-known methods can be used.

The volume average particle diameter of the microcapsules or the micro gels is preferably in a range of 0.01 to 3.0 μm, more preferably in a range of 0.05 to 2.0 μm, and still more preferably in a range of 0.10 to 1.0 μm. Within this range, favorable resolution and temporal stability can be obtained.

The volume average particle diameter is measured using a dynamic light scattering-type particle size distribution analyzer LB-500 (manufactured by Horiba Ltd.) and a light scattering method.

The content of the polymer particle is preferably 5% to 90% by mass of the total solid content of the composition of the embodiment of the present invention.

[Chain transfer agent]

The composition of the embodiment of the present invention may also contain a chain transfer agent. The chain transfer agent contributes to the improvement of the printing resistance of a lithographic printing plate produced from a lithographic printing plate precursor in a case in which the composition of the embodiment of the present invention is applied to the image-recording layer in the lithographic printing plate precursor.

The chain transfer agent is preferably a thiol compound, from the viewpoint of the boiling point (the difficulty of volatilization), more preferably thiol having 7 or more carbon atoms, and still more preferably a compound having a mercapto group on an aromatic ring (an aromatic thiol compound). The above-described thiol compound is preferably a monofunctional thiol compound.

Specific examples of the chain transfer agent include the following compounds.

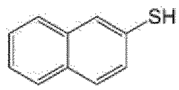

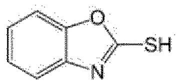 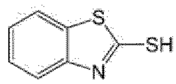 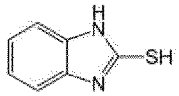

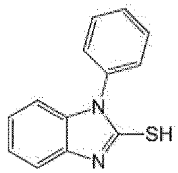 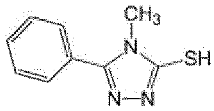 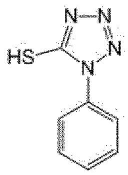

[0126]

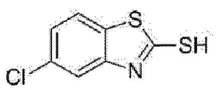 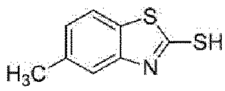 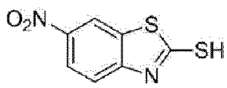 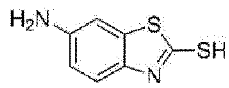

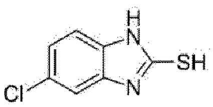 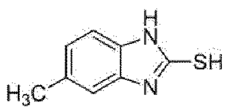 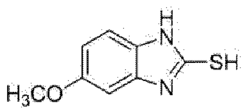 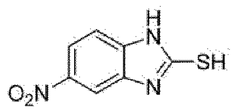

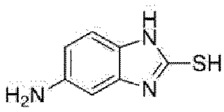 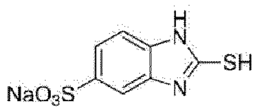 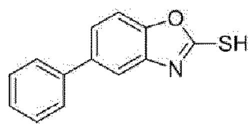

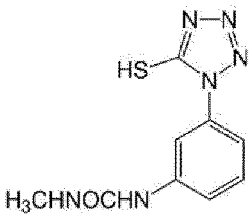 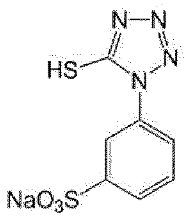

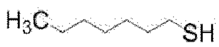 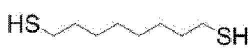

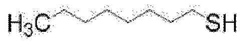
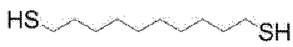
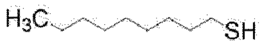
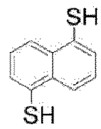
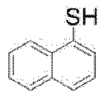
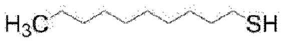
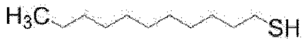
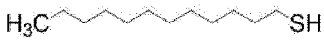
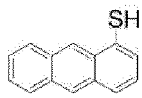
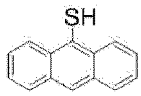
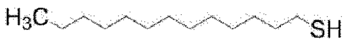
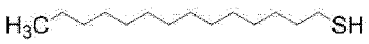
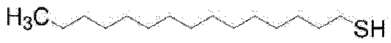
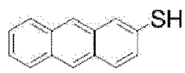
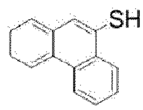
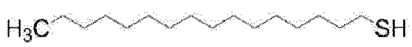
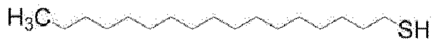
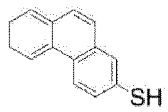
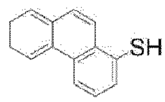
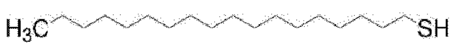
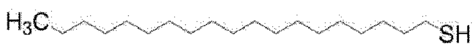
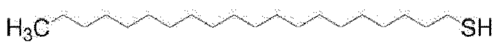
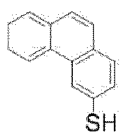
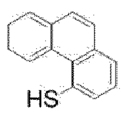
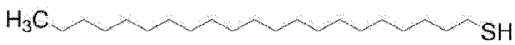
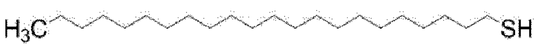

The chain transfer agent may be used singly or two or more chain transfer agents may be jointly used.

The content of the chain transfer agent is preferably 0.01% to 50% by mass, more preferably 0.05% to 40% by mass, and still more preferably 0.1% to 30% by mass of the total solid content of the composition of the embodiment of the present invention.

[Low-molecular-weight hydrophilic compound]

In the case of being applied to the image-recording layer in the lithographic printing plate precursor, in order to improve the on-machine developability of the lithographic printing plate precursor without degrading printing resistance of the lithographic printing plate produced from the lithographic printing plate precursor, the composition of the embodiment of the present invention may include a low-molecular-weight hydrophilic compound. Meanwhile, the low-molecular-weight hydrophilic compound is preferably a compound having a molecular weight of smaller than 1,000, more preferably a compound having a molecular weight of smaller than 800, and still more preferably a compound having a molecular weight of smaller than 500.

As the low-molecular-weight hydrophilic compound, examples of water-soluble organic compounds include glycols such as ethylene glycol, diethylene glycol, triethylene glycol, propylene glycol, dipropylene glycol, and tripropylene glycol and ethers or ester derivative thereof, polyols such as glycerin, pentaerythritol, and tris(2-hydroxyethyl) isocyanurate, organic amines such as triethanolamine, diethanolamine, and monoethanolamine and salts thereof, organic sulfonic acids such as alkyl sulfonic acid, toluenesulfonic acid, and benzenesulfonic acid and salts thereof, organic sulfamic acids such as alkyl sulfamate and salts thereof, organic sulfuric acids such as alkyl sulfates and alkyl ether sulfates and salts thereof, organic phosphonic acids such as phenylphosphonic acid and salts thereof, organic carboxylic acids such as tartaric acid, oxalic acid, citric acid, malic acid, lactic acid, gluconic acid, and amino acid and salts thereof, betaines, and the like.

The low-molecular-weight hydrophilic compound is preferably at least one selected from polyols, organic sulfates, organic sulfonates, or betaines.

Specific examples of the organic sulfonates include alkyl sulfonates such as sodium n-butyl sulfonate, sodium

n-hexyl sulfonate, sodium 2-ethylhexyl sulfonate, sodium cyclohexyl sulfonate, and sodium n-octyl sulfonate; alkyl sulfonates having ethylene oxide chains such as sodium 5,8,11-trioxapentadecane-1-sulfonate, sodium 5,8,11-trioxaheptadecane-1-sulfonate, sodium 13-ethyl-5,8,11-trioxaheptadecane-1-sulfonate, sodium 5,8,11,14-tetraoxatetracosane-1-sulfonate; aryl sulfonates such as sodium benzene sulfonate, sodium p-toluenesulfonate, sodium p-hydroxybenzene sulfonate, sodium p-styrene sulfonate, sodium dimethyl isophthalate-5-sulfonate, sodium 1-naphthyl sulfonate, sodium 4-hydroxynaphthylsulfonate, sodium 1,5-naphthalene disulfonate, and trisodium 1,3,6-naphthalene trisulfonate; compounds described in Paragraphs 0026 to 0031 of JP2007-276454A and Paragraphs 0020 to 0047 of JP2009-154525A; and the like. The salts may be potassium salts or lithium salts.

Examples of the organic sulfates include sulfates of alkyls, alkenyls, alkynyls, aryls, or heterocyclic monoethers of polyethylene oxides. The number of ethylene oxide units is preferably in a range of 1 to 4, and the salts are preferably sodium salts, potassium salts, or lithium salts. Specific examples thereof include compounds described in Paragraphs 0034 to 0038 of JP2007-276454A.

The betaines are preferably compounds in which the number of carbon atoms in hydrocarbon substituents into nitrogen atoms is in a range of 1 to 5, and specific examples thereof include trimethyl ammonium acetate, dimethyl propyl ammonium acetate, 3-hydroxy-4-trimethyl ammonio butyrate, 4-(1-pyridinio) butyrate, 1-hydroxyethyl-1-imidazolio acetate, trimethyl ammonium methanesulfonate, dimethyl propyl ammonium methanesulfonate, 3-trimethylammonio-1-propane sulfonate, 3-(1-pyridinio)-1-propane sulfonate, and the like.

Since the low-molecular-weight hydrophilic compound has a small structure in hydrophobic portions and barely has surfactant actions, there are no cases in which dampening water permeates exposed portions (image areas) in the image-recording layer and thus the hydrophobic properties or membrane hardness of the image areas degrade, and it is possible to favorably maintain the ink-receiving properties or printing resistance of the image-recording layer.

The low-molecular-weight hydrophilic compound may be used singly or two or more low-molecular-weight hydrophilic compounds may be jointly used.

The content of the low-molecular-weight hydrophilic compound is preferably in a range of 0.5% to 20% by mass, more preferably in a range of 1% to 15% by mass, and still more preferably in a range of 2% to 10% by mass of the total solid content of the composition of the embodiment of the present invention.

[Sensitization agent]

In a case in which the composition of the embodiment of the present invention is applied to the image-recording layer in the lithographic printing plate precursor, in order to improve the ink-absorbing property of ink (hereinafter, also simply referred to as the "ink-absorbing property") in a lithographic printing plate produced from the lithographic printing plate precursor, the composition of the embodiment of the present invention may contain a sensitization agent such as a phosphonium compound, a nitrogen-containing low-molecular-weight compound, or an ammonium group-containing polymer. Particularly, in a case in which the lithographic printing plate precursor contains an inorganic lamellar compound in the protective layer, these compounds function as surface coating agents for the inorganic lamellar compound and are capable of suppressing the ink-absorbing properties from being degraded in the middle of printing due to the inorganic lamellar compound.

Among these, a phosphonium compound, a nitrogen-containing low-molecular-weight compound, and an ammonium group-containing polymer are preferably jointly used as the sensitization agent, and a phosphonium compound, quaternary ammonium salts, and an ammonium group-containing polymer are more preferably jointly used.

Examples of a phosphonium compound include phosphonium compounds described in JP2006-297907A and JP2007-050660A. Specific examples thereof include tetrabutylphosphonium iodide, butyltriphenylphosphonium bromide, tetraphenylphosphonium bromide, 1,4-bis(triphenylphosphonio)butane=di(hexafluorophosphate), 1,7-bis(triphenylphosphonio)heptane=sulfate, 1,9-bis(triphenylphosphonio)nonane=naphthalene-2,7-disulfonate, and the like.

Examples of the nitrogen-containing low-molecular-weight compound include amine salts and quaternary ammonium salts. In addition, examples thereof include imidazolinium salts, benzo imidazolinium salts, pyridinium salts, and quinolinium salts. Among these, quaternary ammonium salts and pyridinium salts are preferred. Specific examples thereof include tetramethylammonium=hexafluorophosphate, tetrabutylammonium=hexafluorophosphate, dodecyltrimethylammonium=p-toluene sulfonate, benzyltriethylammonium=hexafluorophosphate, benzyldimethyloctylammonium=hexafluorophosphate, benzyldimethyldodecylammonium=hexafluorophosphate, compounds described in Paragraphs 0021 to 0037 of JP2008-284858A and Paragraphs 0030 to 0057 of JP2009-090645A, and the like.

The ammonium group-containing polymer needs to have an ammonium group in the structure, and polymers including 5% by mol to 80% by mol of (meth)acrylate having ammonium groups in side chains as copolymerization components are preferred. Specific examples thereof include polymers described in Paragraphs 0089 to 0105 of JP2009-208458A.

In the ammonium group-containing polymer, the value of the reducing specific viscosity (unit: ml/g) obtained according to the measurement method described in JP2009-208458A is preferably in a range of 5 to 120, more preferably

in a range of 10 to 110, and particularly preferably in a range of 15 to 100. In a case in which the reducing specific viscosity is converted to the weight-average molecular weight (Mw), the weight-average molecular weight is preferably in a range of 10,000 to 150,000, more preferably in a range of 17,000 to 140,000, and particularly preferably in a range of 20,000 to 130,000.

Hereinafter, specific examples of the ammonium group-containing polymer will be described.

(1) 2-(Trimethylammonio)ethyl methacrylate=p-toluenesulfonate/3,6-dioxaheptyl methacrylate copolymer (molar ratio: 10/90, Mw: 45,000)
(2) 2-(Trimethylammonio)ethyl methacrylate=hexafluorophosphate/3,6-dioxaheptyl methacrylate copolymer (molar ratio: 20/80, Mw: 60,000)
(3) 2-(Ethyldimethylammonio)ethyl methacrylate=p-toluenesulfonate/hexyl methacrylate copolymer (molar ratio: 30/70, Mw: 45,000)
(4) 2-(Trimethylammonio)ethyl methacrylate=hexafluorophosphate/2-ethylhexyl methacrylate copolymer (molar ratio: 20/80, Mw: 60,000)
(5) 2-(Trimethylammonio)ethyl methacrylate=methylsulfate/hexyl methacrylate copolymer (molar ratio: 40/60, Mw: 70,000)
(6) 2-(Butyldimethylammonio)ethyl methacrylate=hexafluorophosphate/3,6-dioxaheptyl methacrylate copolymer (molar ratio: 25/75, Mw: 65,000)
(7) 2-(Butyldimethylammonio)ethyl acrylate=haxafluorophosphate/3,6-dioxaheptyl methacrylate copolymer (molar ratio: 20/80, Mw: 65,000)
(8) 2-(Butyldimethylammonio)ethyl methacrylate=13-ethyl-5,8,11-trioxa-1-heptadecanesulfonate/3,6-dioxaheptyl methacrylate copolymer (molar ratio: 20/80, Mw: 75,000)
(9) 2-(Butyldimethylammonio)ethyl methacrylate=haxafluorophosphate/3,6-dioxaheptyl methacrylate/2-hydroxy-3-methacryloyloxypropyl methacrylate copolymer (molar ratio: 15/80/5, Mw: 65,000)

The content of the sensitization agent is preferably in a range of 0.01% to 30% by mass, more preferably in a range of 0.1% to 15% by mass, and still more preferably in a range of 1% to 10% by mass of the total solid content in the composition of the embodiment of the present invention.

[Other components]

The composition of the embodiment of the present invention may contain, as other components, a surfactant, a polymerization inhibitor, a higher-fatty acid derivative, a plasticizer, inorganic particles, an inorganic lamellar compound, or the like. Specifically, the composition may contain individual components described in Paragraphs 0114 to 0159 of JP2008-284817A.

[Lithographic printing plate precursor]

The lithographic printing plate precursor of the embodiment of the present invention has an image-recording layer containing the composition of the embodiment of the present invention on a support.

Hereinafter, an on-machine development-type lithographic printing plate precursor from which the characteristics of the composition of the embodiment of the present invention are significantly developed will be described as an example.

[Image-recording layer]

According to one aspect of the image-recording layer, the image-recording layer contains an infrared absorber, a polymerizable compound, a polymerization initiator, and at least one of a binder polymer or a polymer particle. The image-recording layer preferably further contains a radical production aid and a chain transfer agent.

According to another aspect of the image-recording layer, the image-recording layer contains an infrared absorber, a thermally adhesive particle, and a binder polymer.

In order to improve the plate inspection property of the lithographic printing plate precursor, it is possible to add an acid color-developing agent to the image-recording layer.

In the image-recording layer, as the polymerization initiator, the specific compound according to the present invention can be used. In addition, in the image-recording layer containing the acid color-developing agent, as the acid-generating agent with respect to the acid color-developing agent, the specific compound according to the present invention can be used.

Regarding the respective components such as an infrared absorber, a polymerizable compound, a polymerization initiator, a binder polymer, a polymer particle, a radical production aid, a chain transfer agent, and a thermally adhesive particle that are added to the image-recording layer and contents thereof, it is possible to refer to the description of the composition of the embodiment of the present invention.

<Formation of image-recording layer>

The image-recording layer can be formed by, for example, as described in Paragraphs 0142 and 0143 of JP2008-195018A, preparing a coating fluid by dispersing or dissolving the respective necessary components described above in a solvent, applying the coating fluid onto a support using a well-known method such as bar coater coating, and drying the coating fluid.

As the solvent, a well-known solvent can be used. Specific examples thereof include water, acetone, methyl ethyl ketone (2-butanone), cyclohexane, ethyl acetate, ethylene dichloride, tetrahydrofuran, toluene, ethylene glycol monomethyl ether, ethylene glycol monoethyl ether, ethylene glycol dimethyl ether, propylene glycol monomethyl ether, propylene glycol monoethyl ether, acetylacetone, cyclohexanone, diacetone alcohol, ethylene glycol monomethyl ether acetate, ethylene glycol ethyl ether acetate, ethylene glycol monoisopropyl ether, ethylene glycol monobutyl ether acetate, n-propanol, 1-methoxy-2-propanol, 3-methoxy-1-propanol, methoxy methoxyethanol, diethylene glycol monomethyl ether, diethylene glycol monoethyl ether, diethylene glycol dimethyl ether, diethylene glycol diethyl ether, propylene glycol monomethyl ether acetate, propylene glycol monoethyl ether acetate, 3-methoxypropyl acetate, N,N-dimethylformamide, dimethyl sulfoxide, $\gamma$-butyrolactone, methyl lactate, ethyl lactate, and the like. The solvent may be used singly or two or more solvents may be jointly used. The concentration of the solid content in the coating fluid is preferably approximately 1% to 50% by mass.

The coating amount (solid content) of the image-recording layer after application and drying varies depending on applications; however, is preferably approximately 0.3 to 3.0 $g/m^2$ from the viewpoint of obtaining a favorable sensitivity and favorable membrane characteristics of the image-recording layer.

[Undercoat layer]

The lithographic printing plate precursor according to the embodiment of the present invention preferably has an undercoat layer (in some cases, referred to as the interlayer) between the image-recording layer and the support. The undercoat layer strengthens adhesiveness between the support and the image-recording layer in exposed portions and facilitates peeling the image-recording layer from the support in non-exposed portions, and thus the undercoat layer contributes to improving developability without impairing printing resistance. In addition, in the case of exposure using infrared lasers, the undercoat layer functions as an adiabatic layer and thus also has an effect of preventing the degradation of the sensitivity due to the diffusion of heat generated by exposure in the support.

Examples of compounds that can be used for the undercoat layer include polymers having adsorbent groups that can be adsorbed to the surface of the support and hydrophilic groups. In order to improve adhesiveness to the image-recording layer, polymers having adsorbent groups and hydrophilic groups and further having crosslinking groups are preferred. The compounds that can be used for the undercoat layer may be low-molecular-weight compounds or polymers. The compounds that can be used for the undercoat layer may be used in a mixed form of two or more kinds as necessary.

In a case in which the compounds that are used for the undercoat layer are polymers, copolymers of monomers having adsorbent groups, monomers having hydrophilic groups, and monomers having crosslinking groups are preferred.

The adsorbent groups that can be adsorbed to the surface of the support are preferably phenolic hydroxy groups, carboxy groups, $-PO_3H_2$, $-OPO_3H_2$, $-CONHSO_2-$, $-SO_2NHSO_2-$, $-COCH_2COCH_3$. The hydrophilic groups are preferably sulfo groups or salts thereof and salts of carboxy groups. The crosslinking groups are preferably acrylic groups, methacrylic groups, acrylamide groups, methacrylamide groups, allyl groups, and the like.

The polymers may have crosslinking groups introduced due to the formation of salts between polar substituents of the polymers and compounds having substituents having opposite charges of the above-described polar substituents and ethylenically unsaturated bonds and may be further copolymerized with monomers other than the above-described monomers, preferably, hydrophilic monomers.

Specifically, preferred examples thereof include silane coupling agents having ethylenic double bond reactive groups that are capable of addition polymerization described in JP1998-282679A (JP-H10-282679A) and phosphorus compounds having ethylenic double bond reactive groups described in JP1990-304441A (JP-H02-304441A). Low-molecular-weight or high-molecular-weight compounds having crosslinking groups (preferably ethylenically unsaturated bond groups), functional groups that interact with the surface of the support, and hydrophilic groups described in JP2005-238816A, JP2005-125749A, JP2006-239867A, and JP2006-215263A are also preferably used.

More preferred examples thereof include high-molecular-weight polymers having adsorbent groups that can be adsorbed to the surface of the support, hydrophilic groups, and crosslinking groups described in JP2005-125749A

and JP2006-188038A.

The content of ethylenically unsaturated bond groups in the polymer that is used in the undercoat layer is preferably in a range of 0.1 to 10.0 mmol and more preferably in a range of 0.2 to 5.5 mmol per gram of the polymer.

The weight-average molecular weight (Mw) of the polymer that is used in the undercoat layer is preferably 5,000 or higher and more preferably in a range of 10,000 to 300,000.

In addition to the above-described compounds for the undercoat layer, the undercoat layer may also include a chelating agent, secondary or tertiary amines, a polymerization inhibitor, compounds having amino groups or functional groups having a polymerization-inhibiting function and groups that interact with the surfaces of supports (for example, 1,4-diazabicyclo[2.2.2]octane (DABCO), 2,3,5,6-tetrahydroxy-p-quinone, chloranil, sulfophthalic acid, hydroxyethyl ethylene diamine triacetic acid, dihydroxyethyl ethylenediamine diacetic acid, hydroxyethyl iminodiacetic acid, and the like), and the like in order to prevent stain over time.

The undercoat layer is formed using well-known coating methods. The coating amount (solid content) of the undercoat layer is preferably in a range of 0.1 to 100 $mg/m^2$ and more preferably in a range of 1 to 30 $mg/m^2$.

[Protective layer]

The lithographic printing plate precursor according to the embodiment of the present invention may have a protective layer (in some cases, also referred to as the overcoat layer) on the image-recording layer. The protective layer has a function of suppressing image formation-inhibiting reactions caused by the shielding of oxygen and additionally has a function of preventing the generation of damage in the image-recording layer and abrasion prevention during exposure using high-illuminance lasers.

Protective layers having the above-described characteristics are described in, for example, the specification of US3458311A and JP1980-049729B (JP-S55-049729B). As poor oxygen-transmissible polymers that can be used for the protective layer, it is possible to appropriately select and use any one of water-soluble polymers or water-insoluble polymers, and, if necessary, it is also possible to use two or more polymers in a mixed form. Specific examples thereof include polyvinyl alcohol, modified polyvinyl alcohol, polyvinyl pyrrolidone, water-soluble cellulose derivatives, poly(meth)acrylonitrile, and the like.

As the modified polyvinyl alcohol, acid-modified polyvinyl alcohol having carboxy groups or sulfo groups are preferably used. Specific examples thereof include modified-polyvinyl alcohols described in JP2005-250216A and JP2006-259137A.

The protective layer preferably includes inorganic lamellar compounds in order to enhance oxygen-shielding properties. The inorganic lamellar compounds refer to particles having thin flat plate shapes, and examples thereof include mica groups such as natural mica and synthetic mica, talc represented by Formula $3MgO\cdot4SiO\cdot H_2O$, taeniolite, montmorillonite, saponite, hectorite, zirconium phosphate, and the like.

The inorganic lamellar compounds that can be preferably used are mica compounds. Examples of mica compounds include mica groups such as natural mica and synthetic mica represented by Formula: $A(B, C)_{2-5}D_4O_{10}(OH, F, O)_2$ [here, A is at least one element selected from the group consisting of K, Na, and Ca, B and C are at least one element selected from the group consisting of Fe (II), Fe (III), Mn, Al, Mg, or V, and D is Si or Al.].

In the mica groups, examples of natural mica include white mica, soda mica, gold mica, black mica, and lepidolite. Examples of synthetic mica include non-swelling mica such as fluorphlogopite $KMg_3(AlSi_3O10)F_2$, potassium tetrasilic mica $KMg_{2.5}(Si_4O_{10})F_2$, and, Na tetrasilylic mica $NaMg_{2.5}(Si_4O_{10})F_2$, swelling mica such as Na or Li taeniolite $(Na, Li)Mg_2Li(Si_4O_{10})F_2$, montmorillonite-based Na or Li hectorite $(Na, Li)_{1/8}Mg_{2/5}Li_{1/8}(Si_4O_{10})F_2$, and the like. Furthermore, synthetic smectite is also useful.

Among the above-described mica compounds, fluorine-based swelling mica is particularly useful. That is, swelling synthetic mica has a laminate structure consisting of unit crystal lattice layers having a thickness in a range of approximately 10 to 15Å (1Å is equal to 0.1 nm), and metal atoms in lattices are more actively substituted than in any other clay minerals. As a result, positive charges are deficient in the lattice layers, and positive ions such as $Li^+$, $Na^+$, $Ca^{2+}$, and $Mg^{2+}$ are adsorbed between the layers in order to compensate for the deficiency. Positive ions interposed between the layers are referred to as exchangeable positive ions and are exchangeable with various positive ions. Particularly, in a case in which the positive ions between the layers are $Li^+$ and $Na^+$, the ionic radii are small, and thus the bonds between lamellar crystal lattices are weak, and mica is significantly swollen by water. In a case in which shear is applied in this state, mica easily cleavages and forms a stable sol in water. The above-described tendency of swelling synthetic mica is strong, and the swelling synthetic mica is particularly preferably used.

From the viewpoint of diffusion control, regarding the shapes of the mica compounds, the thickness is preferably thin, and the planar size is preferably large as long as the smoothness and active light ray-transmitting properties of coated surfaces are not impaired. Therefore, the aspect ratio is preferably 20 or higher, more preferably 100 or higher, and particularly preferably 200 or higher. The aspect ratio is the ratio of the long diameter to the thickness of a particle and can be measured from projection views obtained from the microphotograph of the particle. As the aspect ratio

increases, the obtained effect becomes stronger.

Regarding the particle diameters of the mica compound, the average long diameter thereof is preferably in a range of 0.3 to 20 μm, more preferably in a range of 0.5 to 10 μm, and particularly preferably in a range of 1 to 5 μm. The average thickness of the particles is preferably 0.1 μm or smaller, more preferably 0.05 μm or smaller, and particularly preferably 0.01 μm or smaller. Specifically, for example, in the case of swelling synthetic mica which is a typical compound, a preferred aspect has a thickness in a range of approximately 1 to 50 nm and a surface size (long diameter) in a range of approximately 1 to 20 μm.

The content of the inorganic lamellar compound is preferably in a range of 0% to 60% by mass and more preferably in a range of 3% to 50% by mass of the total solid content of the protective layer. Even in a case in which a plurality of kinds of inorganic lamellar compounds are jointly used, the total amount of the inorganic lamellar compounds is preferably the above-described content. Within the above-described range, the oxygen-shielding properties improve, and a favorable sensitivity can be obtained. In addition, the degradation of the ink-absorbing properties can be prevented.

The protective layer may include well-known additives such as a plasticizer for imparting flexibility, a surfactant for improving coating properties, and inorganic particles for controlling sliding properties on the surface. The protective layer may contain the specific compound according to the present invention. The protective layer may contain the sensitization agent described in the section of the image-recording layer.

The protective layer is formed using a well-known coating method. The coating amount of the protective layer (solid content) is preferably in a range of 0.01 to 10 $g/m^2$, more preferably in a range of 0.02 to 3 $g/m^2$, and particularly preferably in a range of 0.02 to 1 $g/m^2$.

[Support]

A support in the lithographic printing plate precursor according to the embodiment of the present invention can be appropriately selected from well-known supports for a lithographic printing plate precursor and used. The support is preferably an aluminum plate which has been roughened using a well-known method and anodized.

On the aluminum plate, as necessary, enlargement processes or sealing processes of micropores in anodized films described in JP2001-253181A and JP2001-322365A, surface hydrophilization processes using alkali metal silicate as described in the specifications of US2,714,066A, US3,181,461A, US3,280,734A, and US3,902,734A, and surface hydrophilization processes using polyvinyl phosphate or the like as described in the specifications of US3,276,868A, US4,153,461A, and US4,689,272A may be appropriately selected and carried out.

In the support, the center line average roughness is preferably in a range of 0.10 to 1.2 μm.

The support may have, as necessary, a backcoat layer including an organic polymer compound described in JP1993-045885A (JP-H05-045885A) or an alkoxy compound of silicon described in JP1994-035174A (JP-H06-035174A) on the surface opposite to the image-recording layer.

[Method for producing lithographic printing plate]

A method for producing a lithographic printing plate according to the embodiment of the present invention preferably includes a step of image-exposing the lithographic printing plate precursor according to the embodiment of the present invention (exposure step), and a step of removing a non-exposed portion in the image-recording layer using at least one selected from printing ink or dampening water in the lithographic printing plate precursor that has been exposed in an image pattern on a printer (on-machine development step).

[Exposure step]

Image exposure is preferably carried out using a method in which digital data are scanned and exposed using an infrared laser or the like.

The wavelength of the exposure light source is preferably in a range of 750 nm to 1,400 nm. The light source having a wavelength in a range of 750 nm to 1,400 nm is preferably a solid-state laser or a semiconductor laser that radiates infrared rays. The exposure mechanism may be any one of in-plane drum methods, external surface drum methods, flat head methods, or the like.

The exposure step can be carried out using platesetters or the like and well-known methods. In addition, exposure may be carried out on a printer using a printer comprising an exposure device after the lithographic printing plate precursor is mounted on the printer.

[On-machine development step]

In the on-machine development step, in a case in which printing (on-machine development) is initiated by

supplying at least one selected from printing ink or dampening water, preferably, printing ink and dampening water on the printer without carrying out any development processes on the image-exposed lithographic printing plate precursor, non-exposed portions on the lithographic printing plate precursor are removed at the initial stage of printing, and accordingly, the hydrophilic surface of the support is exposed, and non-image areas are formed. As the printing ink and the dampening water, well-known printing ink and dampening water for lithographic printing are used. Any of printing ink or dampening water may be first supplied to the surface of the lithographic printing plate precursor, but it is preferable to first supply printing ink from the viewpoint of preventing contamination by the components of the image-recording layer from which dampening water is removed.

In the above-described manner, the lithographic printing plate precursor is on-machine-developed on an offset printer and is used as it is for printing a number of pieces of paper.

The method for producing a lithographic printing plate according to the embodiment of the present invention may also include other well-known steps in addition to the above-described steps. Examples of other steps include a step of checking a position, a direction, or the like of a lithographic printing plate precursor before each step, or a checking step of checking a printed image after an on-machine development step.

The lithographic printing plate precursor according to the embodiment of the present invention can be used to produce lithographic printing plates by means of a development process in which a developer is used by appropriately selecting the binder polymer and the like which are the constituent components of the image-recording layer. Examples of the development process in which a developer is used include an aspect in which a developer having a high pH of 14 or less which includes an alkaline agent is used (also referred to as an alkali phenomenon) and an aspect in which a developer having a pH of approximately 2 to 11 which contains at least one compound selected from the group consisting of a surfactant or a water-soluble polymer compound is used (also referred to as simple phenomenon). The alkali phenomenon and the simple phenomenon can be carried out using a well-known method.

Examples

Hereinafter, the present invention will be described in detail using examples, but the present invention is not limited thereto. Meanwhile, for polymer compounds, unless particularly otherwise described, the molecular weight refers to the mass-average molecular weight (Mw) converted to a polystyrene equivalent value by the gel permeation chromatography (GPC) method, and the ratio of a repeating unit refers to the molar percentage. In addition, "parts" and "%" indicate "parts by mass" and "% by mass" unless particularly otherwise described.

Example 101 to 109 and Comparative Examples 101 to 104

[Production of lithographic printing plate precursor A]

<Production of support>

In order to remove rolling oil on the surface of a 0.3 mm-thick aluminum plate (material JIS A 1050), a defatting process was carried out thereon using a 10% by mass aqueous solution of sodium aluminate at 50°C for 30 seconds. After that, the surface of the aluminum plate was grained using three implanted nylon brushes having hair diameters of 0.3 mm and a suspension of pumice having a median diameter of 25 μm and water (specific gravity: 1.1 g/cm$^3$) and well washed with water. The aluminum plate was etched by being immersed in a 25% by mass aqueous solution of sodium hydroxide at 45°C for nine seconds, was washed with water, then, was further immersed in a 20% by mass aqueous solution of nitric acid at 60°C for 20 seconds, and was washed with water. The etched amount of the grained surface was approximately 3 g/m$^2$.

Next, an electrochemical roughening process was continuously carried out thereon using an alternating current voltage of 60 Hz. An electrolytic solution was a 1% by mass aqueous solution of nitric acid (including 0.5% by mass of aluminum ions), and the liquid temperature was 50°C. The electrochemical roughening process was carried out thereon using an alternating current power supply waveform in which the time TP taken for the current value to reach the peak from zero was 0.8 msec and the duty ratio was 1:1, and the electrochemical roughening process was carried out using a trapezoidal rectangular wave alternating current and a carbon electrode as a counter electrode. As an auxiliary anode, ferrite was used. The current density was 30 A/dm$^2$ in terms of the peak value of the current, and 5% of the current coming from the power supply was divided into the auxiliary anode. Regarding the quantity of electricity during nitric acid electrolysis, the quantity of electricity was 175 C/dm$^2$ in a case in which the aluminum plate served as the positive electrode. After that, the plate was washed with water by means of spraying.

Subsequently, an electrochemical roughening process was carried out thereon using the same method as nitric acid electrolysis in a 0.5% by mass aqueous solution of hydrochloric acid (including 0.5% by mass of aluminum ions) and an electrolytic solution having a liquid temperature of 50°C under a condition of the quantity of electricity of 50 C/dm$^2$

in a case in which the aluminum plate served as the positive electrode, and then, the plate was washed with water by means of spraying.

Next, 2.5 g/$m^2$ of a direct current anodized film was formed on the aluminum plate at a current density of 15 A/$dm^2$ using a 15% by mass aqueous solution of sulfuric acid (including 0.5% by mass of aluminum ions) as an electrolytic solution, and water washing and drying were carried out thereon, thereby producing a support A. The average pore diameter of the surface layer of the anodized film (surface average pore diameter) was 10 nm.

The pore diameter of the surface layer of the anodized film was measured using a method in which the surface was observed an ultrahigh resolution SEM (S-900 manufactured by Hitachi, Ltd.) at a relatively low acceleration voltage of 12 V at a magnification of 150,000 times without carrying out a vapor deposition process or the like for imparting conductive properties, 50 pores were randomly extracted, and the average value was obtained. The standard deviation error was ±10% or less.

After that, in order to ensure the hydrophilicity of a non-image area, a silicate process was carried out on the support A using a 2.5% by mass aqueous solution of No. 3 sodium silicate at 60°C for ten seconds, and the support was washed with water, thereby producing a support B. The attached amount of Si was 10 mg/$m^2$. The center line average roughness (Ra) of the support B was measured using a needle having a diameter of 2 μm and was found to be 0.51 μm.

A support C was produced in the same manner as in the method for producing the support A except for the fact that, in the production of the support A, the electrolytic solution in the formation of the direct current anodized film was changed to a 22% by mass aqueous solution of phosphoric acid. The average pore diameter on the surface layer of the anodized film (surface average pore diameter) was measured using the same method as described above and found out to be 25 nm.

After that, a silicate process was carried out on the support C using a 2.5% by mass aqueous solution of No. 3 silicate soda at 60°C for 10 seconds in order to ensure the hydrophilicity of a non-image area and then washed with water, thereby producing a support D. The amount of Si attached was 10 mg/$m^2$. The center line average roughness (Ra) of the support D was measured using a needle having a diameter of 2 μm and found out to be 0.52 μm.

<Formation of undercoat layer>

A coating fluid for an undercoat layer (1) having the following composition was applied onto the support A so that the dried coating amount reached 20 mg/$m^2$, thereby forming an undercoat layer.

(Coating Fluid for Undercoat Layer (1))

| | |
|---|---|
| • Polymer (P-1) [illustrated below] | 0.18 g |
| • Hydroxyethyl iminodiacetic acid | 0.10 g |
| • Water | 61.4 g |

(P-1)

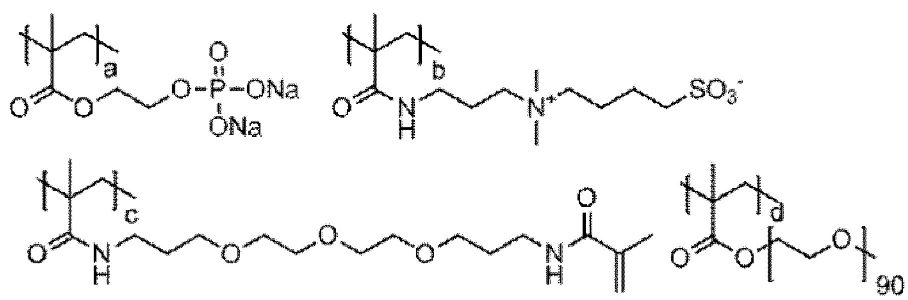

a / b / c / d = 14.2 / 71.8 / 9.0 / 5.0 (wt%)
a / b / c / d = 19.0 / 72.8 / 7.8 / 0.4 (mol%)

A method for synthesizing the polymer (P-1) will be described below.

(Synthesis of monomer M-1)

ANCAMINE 1922A (diethylene glycol di(aminopropyl) ether, manufactured by Air Products) (200 parts), distilled water (435 parts), and methanol (410 parts) were added to a three-neck flask and cooled to 5°C. Next, benzoic acid (222.5 parts) and 4-hydroxy-2,2,6,6-tetramethylpiperidine-1-oxyl (4-OH-TEMPO) (0.025 parts) were added thereto, and a methacrylic anhydride (280 parts) was added dropwise thereto so that the inner temperature of the reaction liquid reached 10°C or lower. The reaction liquid was stirred at 5°C for six hours and, subsequently, stirred at 25°C for 12 hours, and then phosphoric acid (70 parts) was added thereto so as to adjust the pH to 3.3. The reaction liquid was moved to a stainless steel beaker, ethyl acetate (3,320 parts), methyl-tert butyl ether (MTBE) (1,120 parts), and distilled water (650 parts) were added thereto, and the components were strongly stirred and then left to stand. The upper layer (organic layer) was disposed of, then, ethyl acetate (1,610 parts, 1.8 L) was added thereto, the components were strongly stirred and then left to stand, and the upper layer was disposed of. Furthermore, ethyl acetate (1,350 parts) was added thereto, the components were strongly stirred and then left to stand, and the upper layer was disposed of. Next, MTBE (1,190 parts) was added thereto, the components were strongly stirred and then left to stand, and the upper layer was disposed of. 4-OH-TEMPO (0.063 parts) was added to the obtained aqueous solution, thereby obtaining an aqueous solution of a monomer M-1 (12,000 parts, 20.1% by mass in terms of the solid content).

(Purification of monomer M-2)

LIGHT ESTER P-1M (2-methacryloyloxyethyl acid phosphate, manufactured by Kyoeisha Chemical Co., Ltd.) (420 parts), diethylene glycol dibutyl ether (1,050 parts), and distilled water (1,050 parts) were added to a separating funnel, strongly stirred, and then left to stand. The upper layer was disposed of, diethylene glycol dibutyl ether (1,050 parts) was added thereto, and the components were strongly stirred and then left to stand. The upper layer was disposed of, thereby obtaining an aqueous solution of a monomer M-2 (13,000 parts, 10.5% by mass in terms of the solid content).

(Synthesis of polymer P-1)

Distilled water (600.6 parts), the aqueous solution of the monomer M-1 (33.1 parts), and a monomer M-3 described below (46.1 parts) were added to a three-neck flask and heated to 55°C in a nitrogen atmosphere. Next, the following dropwise addition liquid 1 was added dropwise thereto for two hours, the components were stirred for 30 minutes, then, VA-046B (manufactured by Wako Pure Chemical Corporation) (3.9 parts) was added thereto, and the components were heated to 80°C and stirred for 1.5 hours. The reaction liquid was returned to room temperature (25°C, which shall apply below), and then a 30% by mass aqueous solution of sodium hydroxide (175 parts) was added thereto, thereby adjusting the pH to 8.3. Next, 4-OH-TEMPO (0.152 parts) was added thereto, and the components were heated to 53°C. A methacrylic anhydride (66.0 parts) was added thereto, and the components were stirred at 53°C for three hours. The components were returned to room temperature, then, the reaction liquid was moved to a stainless steel beaker, MTBE (1,800 parts) was added thereto, the components were strongly stirred and then left to stand, and the upper layer was disposed of. A washing operation using MTBE (1,800 parts) was further repeated twice in the same manner, and then distilled water (1,700 parts) and 4-OH-TEMPO (0.212 parts) were added to the obtained water layer, thereby obtaining a polymer P-1 (41,000 parts, 11.0% in terms of the solid content) as a homogeneous solution. The mass-average molecular weight (Mw) converted to a polyethylene glycol equivalent value by the gel permeation chromatography (GPC) method was 200,000.

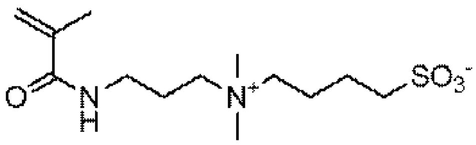

Monomer M-3

(Dropwise addition liquid 1)

| | |
|---|---|
| • The aqueous solution of the monomer M-1 | 132.4 g |
| • The aqueous solution of the monomer M-2 | 376.9 g |
| • Monomer M-3 [illustrated above] | 184.3 g |

(continued)

| | |
|---|---|
| • BREMMER PME 4000 (manufactured by NOF Corporation) | 15.3 g |
| • VA-046B (manufactured by Wako Pure Chemical Corporation) | 3.9 g |
| • Distilled water | 717.4 g |
| BREMMER PME 4000: Methoxy polyethylene glycol methacrylate (the number of the oxyethylene unit repeated: 90) VA-046B: 2,2'-Azobis[2-(2-imidazolin-2-yl)propane] disulfate dihydrate | |

<Formation of image-recording layer>

A coating fluid for an image-recording layer (1) having the following composition was applied onto the undercoat layer by means of bar coating and was dried in an oven at 100°C for 60 seconds, thereby forming an image-recording layer having a dried coating amount of 1.0 g/$m^2$.

The coating fluid for the image-recording layer (1) was prepared by mixing and stirring the following photosensitive liquid (1) and a micro gel liquid immediately before the application.

<Photosensitive liquid (1)>

| | |
|---|---|
| • Binder polymer (1) [illustrated below] | 0.240 g |
| • Infrared absorber (D-1) [illustrated below] | 0.024 g |
| • Polymerization initiator shown in Table A (specific compound or well-known compound) | 0.245 g |
| • Polymerizable compound | 0.192 g |
| Tris(acryloyloxyethyl)isocyanurate | |
| (NK ester A-9300, manufactured by Shin-Nakamura Chemical Co., Ltd.) | |
| • Low-molecular-weight hydrophilic compound: | 0.062 g |
| Tris(2-hydroxyethyl)isocyanurate | |
| • Fluorine-based surfactant (1) [illustrated below] | 0.008 g |
| 2-Butanone | 1.091 g |
| 1-Methoxy-2-propanol | 8.609 g |

<Micro gel liquid>

- Micro gel (1): 2.640 g
- Distilled water: 2.425 g

The structures of the binder polymer (1), the infrared absorber (D-1), and the fluorine-based surfactant (1) which were used for the photosensitive liquid (1) will be illustrated below. In the binder polymer (1), numbers on the lower right side of parentheses of individual constitutional units represent molar ratios.

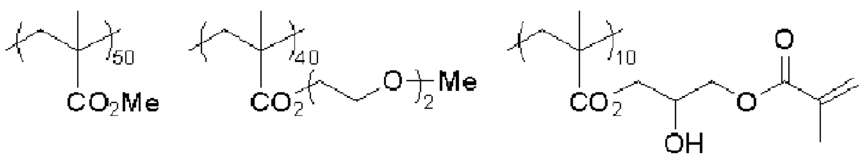

(Mw 70, 000)

Binder polymer (1)

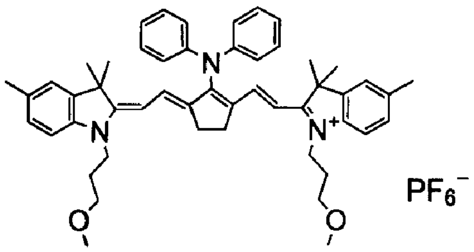

Infrared absorber (D-1)

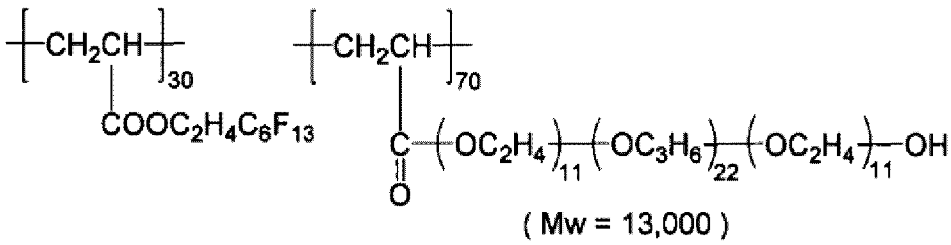

Fluorine-based surfactant (1)

A method for preparing a micro gel (1) used for the micro gel liquid will be described below.

<Preparation of Polyhydric Isocyanate Compound (1)>

Bismuth tris(2-ethylhexanoate) (NEOSTAN U-600, manufactured by Nitto Kasei Co., Ltd.) (43 mg) was added to an ethyl acetate (25.31 g) suspended solution of isophorone diisocyanate (17.78 g, 80 mmol) and the following polyhydric phenol compound (1) (7.35 g, 20 mmol), and the components were stirred. The reaction temperature was set to 50°C in a case in which the generation of heat settled, and the components were stirred for three hours, thereby obtaining an ethyl acetate solution of a polyhydric isocyanate compound (1) (50% by mass).

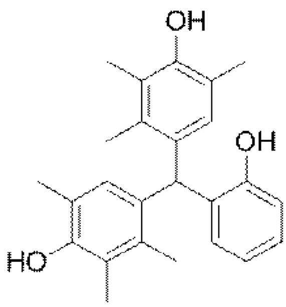

Polyhydric phenol compound (1)

<Preparation of micro gel (1)>

Oil-phase components described below and a water-phase component described below were mixed together and emulsified at 12,000 rpm for 10 minutes using a homogenizer. The obtained emulsion was stirred at 45°C for four hours, a 10% by mass aqueous solution of 1,8-diazabicyclo[5.4.0]undec-7-ene-octanoic acid salt (U-CAT SA102, manufactured by San-Apro Ltd.) (5.20 g) was added thereto, and the components were stirred at room temperature for 30 minutes and left to stand at 45°C for 24 hours. Adjustment was made using distilled water so that the concentration of the solid content reached 20% by mass, thereby obtaining a water dispersion liquid of a micro gel (1). The volume average particle diameter was measured using a dynamic light scattering-type particle size distribution analyzer LB-500 (manufactured by Horiba Ltd.) and the light scattering method and found out to be 0.28 $\mu$m.

(Oil-phase components)

(Component 1) Ethyl acetate: 12.0 g
(Component 2) An adduct obtained by adding trimethylolpropane (6 mol) and xylene diisocyanate (18 mol) and adding methyl single terminal polyoxy ethylene (1 mol, the number of the oxyethylene unit repeated: 90) thereto (a solution of 50% by mass of ethyl acetate, manufactured by Mitsui Chemicals Inc.): 3.76 g
(Component 3) Polyhydric isocyanate compound (1) (as a solution of 50% by mass of ethyl acetate): 15.0 g
(Component 4) An ethyl acetate solution of 65% by mass of dipentaerythritol pentaacrylate (SR-399, Sartomer Japan Inc.): 11.54 g

(Component 5) An ethyl acetate solution of 10% of a sulfonate-type surfactant (BIONINE A-41-C, manufactured by Takemoto Oil & Fat Co., Ltd.): 4.42 g

(Water-phase component)

Distilled water: 46.87 g

[Evaluation of lithographic printing plate precursors]

For the respective lithographic printing plate precursors A described above, the on-machine developability, the thermal and temporal stability (1), and the printing resistance were evaluated using the following evaluation methods. The evaluation results are shown in Table A.

<On-Machine Developability>

The lithographic printing plate precursors were exposed using a LUXEL PLATESETTER T-6000III manufactured by Fujifilm Corporation which was equipped with an infrared semiconductor laser under conditions of an external surface drum rotation speed of 1,000 rpm, a laser output of 70%, and a resolution of 2,400 dpi. Exposed images were provided with solid images and 50% halftone dot charts of 20 μm dot FM screens.

Without carrying out a development process on the exposed lithographic printing plate precursors, the lithographic printing plate precursors were attached to the plate trunk of a printer LITHRONE 26 manufactured by Komori Corporation. Dampening water and ink were supplied using dampening water of ECOLITY-2 (manufactured by Fujifilm Corporation)/tap water=2/98 (capacity ratio) and Values-G(N) BLACK INK (manufactured by DIC Graphics Corporation) and using the standard automatic printing start method of LITHRONE 26, and then printing was carried out on 100 pieces of TOKUBISHI art paper (76.5 kg) (manufactured by Mitsubishi Paper Mills limited) at a printing rate of 10,000 pieces per hour.

The on-machine development of non-exposed portions in the image-recording layer was completed on the printer, and the number of pieces of printing paper required until ink was not transferred to the non-image areas was measured and evaluated as the on-machine developability. A smaller number of pieces of printing paper indicates superior on-machine developability.

<Thermal and temporal stability (1)>

The lithographic printing plate precursor was adjusted in humidity in an environment of 25°C and 60% for one hour and then packed. Next, the packed matter was thermally aged at 60°C for four days. After the end of the thermal aging, in the same manner as in the evaluation of the on-machine developability, image exposure and on-machine development were carried out, the number of pieces of printing paper was measured, and the thermal and temporal stability (1) was evaluated. A smaller number of pieces of printing paper indicates superior thermal and temporal stability.

<Printing resistance>

After the on-machine developability were evaluated, printing was further continued. As the number of pieces of printed paper increased, the image-recording layer gradually wore, and thus the ink concentration on printed matters decreased. The number of pieces of printed paper until the value of the halftone dot area ratio of FM screen 50% halftone dots on printed matters measured using a gretag density meter decreased to be 5% lower than the measurement value of a $100^{th}$ piece of paper was measured. The printing resistance was evaluated using relative printing resistance for which the number of pieces of printed paper of 50,000 was considered as 100 as shown in the following expression. A larger numerical value indicates superior printing resistance.

Relative printing resistance=[(the number of pieces of printed paper of the subject lithographic printing plate precursor)/50,000]×100

[Table 4]

Table A

| | Polymerization initiator | On-machine developability (number of pieces) | Thermal and temporal stability (1) (number of pieces) | Printing resistance |
|---|---|---|---|---|
| Example 101 | I-1 | 25 | 35 | 80 |
| Example 102 | I-3 | 35 | 25 | 75 |
| Example 103 | I-5 | 23 | 28 | 80 |
| Example 104 | I-6 | 12 | 30 | 83 |
| Example 105 | I-10 | 15 | 25 | 82 |
| Example 106 | I-13 | 18 | 21 | 85 |
| Example 107 | I-18 | 22 | 36 | 74 |
| Example 108 | I-25 | 28 | 30 | 79 |
| Example 109 | I-39 | 13 | 25 | 82 |
| Comparative Example 101 | H-1 | 50 | 100< | 70 |
| Comparative Example 102 | H-2 | 20 | 45 | 62 |
| Comparative Example 103 | H-3 | 25 | 42 | 68 |
| Comparative Example 104 | H-4 | 100< | 55 | 60 |

In Table A, 1-1, 1-3, 1-5, 1-6, 1-10, 1-13, 1-18, 1-25, and 1-39 shown in the column of "polymerization initiator" indicate the specific compound of the present invention, and the structures thereof are as illustrated above. In addition, H-1, H-2, H-3, and H-4 are well-known compounds, and the structures thereof are as illustrated below. In the formulae, $TfO^-$ represents a trifluoromethanesulfonate anion, and $TsO^-$ represents a tosylate anion. The compounds H-1 to H-4 were synthesized using a well-known method.

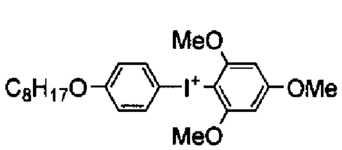
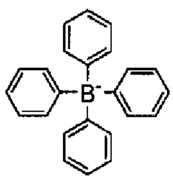

H-1

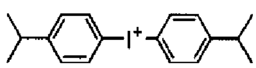

TfO−

H-3

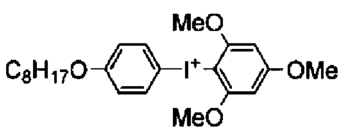

$PF_6^-$

H-2

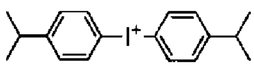

TsO−

H-4

From the results shown in Table A, it is found that the lithographic printing plate precursors having the image-recording layer containing the specific compound according to the present invention as the polymerization initiator are excellent in terms of all of the thermal and temporal stability (1), the on-machine developability, and the printing resistance.

The lithographic printing plate precursors of the comparative examples containing a well-known polymerization initiator are poor in terms of any one or more of the thermal and temporal stability (1), the on-machine developability, or the printing resistance.

(Examples 201 to 213 and Comparative Examples 201 to 204)

[Production of lithographic printing plate precursor B]

A lithographic printing plate precursor B was produced in the same manner as in the production of the lithographic printing plate precursor A except for the fact that, in the production of the lithographic printing plate precursor A, the support B was used instead of the support A, an image-recording layer coating fluid (2) described below was used instead of the image-recording layer coating fluid (1), and, furthermore, a protective layer described below was formed on the image-recording layer. The image-recording layer coating fluid (2) was prepared by mixing and stirring a photosensitive liquid (2) described below and a micro gel liquid immediately before being applied. Infrared absorbers and polymerization initiators in the image-recording layer coating fluid (2) which were used to produce the respective lithographic printing plate precursors are summarized in Table B.

| <Photosensitive liquid (2)> | Amount added |
|---|---|
| • Binder polymer (1) [illustrated above]: | 0.240 g |
| • Infrared absorber (D-1) [illustrated above] or infrared absorber (D-2) [illustrated below] | 0.024 g |
| • Polymerization initiator shown in Table B (specific compound or well-known compound) | Amount shown in Table B |
| • Polymerizable compound | 0.192 g |
| Tris(acryloyloxyethyl) isocyanurate | |
| (NK ESTER A-9300, manufactured by Shin Nakamura Chemical Co., Ltd.) | |
| • Acid color-developing agent | 0.080 g |
| 2'-Anilino-6'-(N-ethyl-N-isopentylamino)-3'-methylspiro[phthalide-3,9'-xanthene] | |
| (S-205, manufactured by Fukui Yamada Chemical Co., Ltd.) | |
| • Fluorine-based surfactant (1) [illustrated above] | 0.008 g |
| • 2-Butanone: | 1.091 g |
| • 1-Methoxy-2-propanol: | 8.609 g |

<Micro gel liquid>

| | |
|---|---|
| Micro gel (1) [illustrated above]: | 2.640 g |
| Distilled water: | 2.425 g |

The structure of the infrared absorber (D-2) used in the photosensitive liquid (2) will be illustrated below.

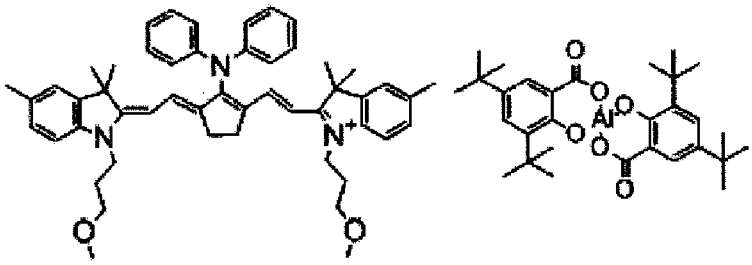

Infrared absorber (D-2)

<Formation of protective layer>

A coating fluid for a protective layer having the following composition was applied onto the image-recording layer by means of bar coating and dried in an oven at 120°C for 60 seconds, thereby forming a protective layer having a dried coating amount of 0.15 g/$m^2$.

<Coating fluid for protective layer>

| | |
|---|---|
| • Inorganic lamellar compound dispersion liquid (1) [illustrated below] | 1.5 g |
| • Six percent by mass aqueous solution of polyvinyl alcohol (CKS50 manufactured by The Nippon Synthetic Chemical Industry Co., Ltd., sulfonic acid-modified, degree of saponification: 99% by mol or higher, degree of polymerization: 300) | 0.55 g |
| • Six percent by mass aqueous solution of polyvinyl alcohol (PVA-405 manufactured by Kuraray Co., Ltd., degree of saponification: 81.5 mol%, degree of polymerization: 500) | 0.03 g |
| • One percent by mass aqueous solution of a surfactant (polyoxyethylene lauryl ether, EMALEX 710, manufactured by Nihon Emulsion Co., Ltd.) | 0.86 g |
| • Ion exchange water | 6.0 g |

A method for preparing the inorganic lamellar compound dispersion liquid (1) will be described below.

<Preparation of inorganic lamellar compound dispersion liquid (1)>

Synthetic mica (SOMASIF ME-100 manufactured by Co-op Chemical Co., Ltd.) (6.4 g) was added to ion exchange water (193.6 g) and dispersed using a homogenizer until the average particle diameter (laser scattering method) reached 3 μm. The aspect ratio of the obtained dispersed particle was 100 or higher.

[Evaluation of lithographic printing plate precursors]

For the respective lithographic printing plate precursors B, the on-machine developability, the thermal and temporal stability (1), and the printing resistance were evaluated in the same manner as those of the lithographic printing plate precursor A. Furthermore, the color developability and the thermal and temporal stability (2) (ring-shaped color development prevention property) were evaluated using the following evaluation method. The results are shown in Table B.

<Color developability>

The lithographic printing plate precursor was exposed using a TRENDSETTER 3244VX manufactured by Creo Co., Ltd. which was equipped with a water cooling-type 40 W infrared semiconductor laser under conditions of an output of 11.7 W, an external surface drum rotation speed of 250 rpm, and a resolution of 2,400 dpi (dot per inch, 1 inch=25.4 mm). The exposure was carried out in an environment of 25°C and 50%RH.

The color development of the lithographic printing plate precursor was measured immediately after the exposure. The color development was measured using a spectrophotometer CM2600d and operation software CM-S100W manufactured by Konica Minolta, Inc. by means of a specular component excluded (SCE) method. The color developability were evaluated using the difference ΔL between the L* value of an exposed portion and the L* value of a non-exposed portion using L* values (brightness) in the L*a*b* color system. The numerical values of ΔL are shown in Table B. A larger value of ΔL indicates superior color developability and also indicates a superior plate inspection property of the lithographic printing plate precursor by color development.

<Thermal and temporal stability (2) (ring-shaped color development prevention property)>

The lithographic printing plate precursor was adjusted in humidity in an environment of 25°C and 60% for one hour and then packed. Next, the packed matter was thermally aged at 60°C for four days. After the end of the thermal aging, the number of dots that developed color in a ring shape in a 50×300 mm area range was visually counted. The ring-shaped color development prevention property was evaluated by rating a lithographic printing plate precursor having no color-developed points as A, a lithographic printing plate precursor having 1 to 9 color-developed points as B, and a

lithographic printing plate precursor having 10 or more color-developed points as C. The lithographic printing plate precursor is demanded not to develop color in a ring shape (B and C are indexes for expressing the difference in degree of ring-shaped color development).

[Table 5]

Table B

| | Infrared absorber | Polymerization initiator | Color developability | Thermal and temporal stability (2) | On-machine developability (number of pieces) | Thermal and temporal stability (1) (number of pieces) | Printing resistance |
|---|---|---|---|---|---|---|---|
| Example 201 | D-1 | I-1 (0.245) | 5.3 | A | 20 | 30 | 75 |
| Example 202 | D-1 | I-3 (0.245) | 5.8 | A | 30 | 20 | 70 |
| Example 203 | D-1 | I-5 (0.245) | 5.6 | A | 20 | 25 | 75 |
| Example 204 | D-1 | I-6 (0.245) | 5.4 | A | 8 | 25 | 78 |
| Example 205 | D-1 | I-10 (0.245) | 5.5 | A | 10 | 20 | 80 |
| Example 206 | D-1 | I-13 (0.245) | 5.2 | A | 15 | 20 | 82 |
| Example 207 | D-1 | I-1-Na (0.06) H-4 (0.18) | 5.3 | A | 20 | 30 | 75 |
| Example 208 | D-1 | I-5-Na (0.06) H-4 (0.18) | 5.6 | A | 22 | 27 | 75 |
| Example 209 | D-1 | I-10-Na (0.06) H-4 (0.18) | 5.4 | A | 15 | 20 | 80 |
| Example 210 | D-1 | I-18 (0.245) | 5.5 | A | 20 | 18 | 78 |
| Example 211 | D-1 | I-25 (0.245) | 5.6 | A | 25 | 25 | 75 |
| Example 212 | D-1 | I-34 (0.245) | 5.9 | A | 18 | 22 | 78 |
| Example 213 | D-2 | I-10 (0.245) | 5.4 | A | 15 | 25 | 78 |
| Comparative Example 201 | D-1 | H-1 (0.245) | 5.0 | A | 50 | 100< | 75 |
| Comparative Example 202 | D-1 | H-2 (0.245) | 3.5 | C | 20 | 35 | 65 |
| Comparative Example 203 | D-1 | H-3 (0.245) | 4.0 | B | 25 | 32 | 65 |

(continued)

| | Infrared absorber | Polymerization initiator | Color developability | Thermal and temporal stability (2) | On-machine developability (number of pieces) | Thermal and temporal stability (1) (number of pieces) | Printing resistance |
|---|---|---|---|---|---|---|---|
| Comparative Example 204 | D-1 | H-4 (0.245) | 3.0 | A | 100< | 30 | 65 |

In Table B, I-1, I-1-Na, I-3, I-5, I-5-Na, I-6, I-10, I-10-Na, I-13, I-18, I-25, and I-34 shown in the column of "polymerization initiator" indicate the specific compound of the present invention, and the structures thereof are as illustrated above. In addition, H-1, H-2, H-3, and H-4 are well-known compounds, and the structures thereof are as illustrated above. In Table B, numerical values in parentheses indicate the amounts added, and the unit is "g".

From the results shown in Table B, it is found that the lithographic printing plate precursors having the image-recording layer containing the specific compound as the polymerization initiator according to the present invention are excellent in terms of all of the thermal and temporal stability (1), the on-machine developability, the printing resistance, the color developability, and the thermal and temporal stability (2).

The lithographic printing plate precursors of the comparative examples containing a well-known polymerization initiator are poor in terms of any one or more of the thermal and temporal stability (1), the on-machine developability, the printing resistance, the color developability, or the thermal and temporal stability (2).

(Examples 301 to 313 and Comparative Examples 301 to 304)

[Production of Lithographic Printing Plate Precursor C]

A lithographic printing plate precursor C was produced by using the support C instead of the support A, applying an image-recording layer coating fluid (3) having the following composition by means of bar coating instead of the image-recording layer coating fluid (1) and drying the coating fluid in an oven at 70°C for 60 seconds, thereby forming an image-recording layer having a dried coating amount of 0.6 $g/m^2$ in the production of the lithographic printing plate precursor A. Infrared absorbers and polymerization initiators in the image-recording layer coating fluid (3) which were used to produce the respective lithographic printing plate precursors are summarized in Table C.

<Image-recording layer coating fluid (3)>

| | |
|---|---|
| • Infrared absorber (D-3) or (D-4) [illustrated below] | 0.018 g |
| • Polymerization initiator shown in Table C (specific compound or well-known compound) | Amount shown in Table C |
| • Borate compound: | 0.010 g |
| TPB [illustrated below] | |
| • Polymer particle water dispersion liquid (1) (22% by mass) [illustrated below]: 10.0 g | |
| • Polymerizable compound: | 1.50 g |
| SR-399 (manufactured by Sartomer Japan Inc.) | |
| • Acid color-developing agent | 0.080 g |
| 2'-Anilino-6'-(N-ethyl-N-isopentylamino)-3'-methylspiro[phthalide-3,9'-xanthene] | |
| (S-205, manufactured by Fukui Yamada Chemical Co., Ltd.) | |
| • Mercapto-3-triazole: | 0.2 g |
| • Byk 336 (manufactured by BYK Additives & Instruments): | 0.4 g |
| • Klucel M (manufactured by Hercules Incorporated): | 4.8 g |
| • ELVACITE 4026 (manufactured by Ineos Acrylics): | 2.5 g |
| • n-Propanol: | 55.0 g |
| • 2-Butanone: | 17.0 g |

The infrared absorbers (D-3) and (D-4), TPB, and the compounds expressed using trade names which were used for the image-recording layer coating fluid (3) are as described below.

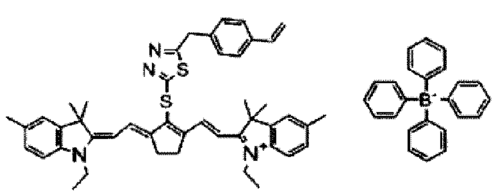

Infrared absorber (D-3)

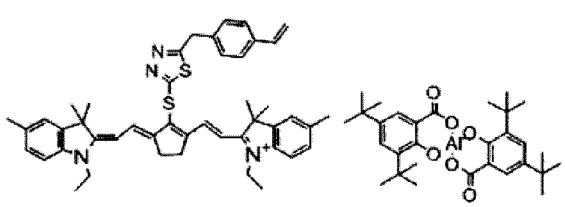

Infrared absorber (D-4)

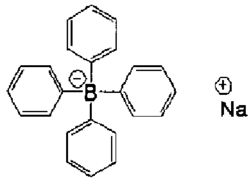

TPB

SR-399: Dipentaerythritol pentaacrylate

Byk 336: Modified dimethyl polysiloxane copolymer (a solution of 25% by mass of xylene and methoxypropyl acetate)
Klucel M: Hydroxypropyl cellulose (2% by mass aqueous solution)
ELVACITE 4026: Highly branched polymethyl methacrylate (a solution of 10% by mass of 2-butanone)

A method for preparing the polymer particle water dispersion liquid (1) used for the image-recording layer coating fluid (3) will be described below.

<Preparation of Polymer Particle Water Dispersion Liquid (1)>

A stirrer, a thermometer, a dropping funnel, a nitrogen introduction pipe, and a reflux cooler were provided to a four-neck flask, nitrogen gas was introduced thereinto, polyethylene glycol methyl ether methacrylate (PEGMA, the average repeating unit number of ethylene glycol: 50) (10 g), distilled water (200 g), and n-propanol (200 g) were added thereto while carrying out deoxidation by introducing nitrogen gas, and the components were heated until the inner temperature reached 70°C. Next, a mixture obtained by mixing styrene (St) (10 g), acrylonitrile (AN) (80 g), and 2,2'-azobisisobutyronitrile (0.8 g) in advance was added dropwise thereto for one hour. A reaction continued for five hours after the end of the dropwise addition, then, 2,2'-azobisisobutyronitrile (0.4 g) was added thereto, and the inner temperature was increased up to 80°C. Subsequently, 2,2'-azobisisobutyronitrile (0.5 g) was added thereto for six hours. At a stage of continuing the reaction for a total of 20 hours, 98% or more of polymerization had progressed, and a polymer particle water dispersion liquid (1) including PEGMA/St/AN in a mass ratio of 10/10/80 was prepared. The particle size distribution of the polymer particles had the maximum value at a particle diameter of 150 nm.

The particle size distribution was obtained by capturing an electron micrograph of the polymer particles, measuring the particle diameters of a total of 5,000 particles on the photograph, dividing the range of the obtained particle diameter measurement values from zero to the maximum value into 50 sections using a logarithmic scale, and plotting the appearance frequency of the respective particle diameters. Meanwhile, for a non-spherical particle, the particle diameter value of a spherical particle having the same particle area as the particle area on the photograph was considered as the particle diameter.

[Evaluation of lithographic printing plate precursors]

For the respective lithographic printing plate precursors C, the thermal and temporal stability (1), the on-machine developability, the printing resistance, the color developability, and the thermal and temporal stability (2) were evaluated in the same manner as those of the lithographic printing plate precursor B. The evaluation results are shown in Table C.

[Table 6]

Table C

| | Infrared absorber | Polymerization initiator | Color developability | Thermal and temporal stability (2) | On-machine developability (number of pieces) | Thermal and temporal stability (1) (number of pieces) | Printing resistance |
|---|---|---|---|---|---|---|---|
| Example 301 | D-3 | I-1 (0.16) | 4.3 | A | 25 | 35 | 75 |
| Example 302 | D-3 | I-2 (0.16) | 4.2 | A | 32 | 25 | 73 |
| Example 303 | D-3 | I-7(0.16) | 4.5 | A | 22 | 27 | 70 |
| Example 304 | D-3 | I-10(0.16) | 4.4 | A | 12 | 20 | 75 |
| Example 305 | D-3 | I-14 (0.16) | 4.0 | A | 15 | 25 | 78 |
| Example 306 | D-3 | I-15 (0.16) | 4.2 | A | 15 | 25 | 79 |
| Example 307 | D-3 | I-2-Na (0.04) H-4 (0.12) | 4.1 | A | 30 | 30 | 76 |
| Example 308 | D-3 | I-10-Na (0.04) H-4 (0.12) | 4.2 | A | 15 | 22 | 75 |
| Example 309 | D-3 | I-15-Na (0.04) H-4 (0.12) | 4.2 | A | 20 | 27 | 80 |
| Example 310 | D-3 | I-20 (0.16) | 4.6 | A | 25 | 23 | 78 |
| Example 311 | D-3 | I-21 (0.16) | 4.4 | A | 28 | 29 | 75 |
| Example 312 | D-3 | I-35 (0.16) | 4.8 | A | 25 | 29 | 73 |
| Example 313 | D-4 | I-15 (0.16) | 4.3 | A | 15 | 20 | 80 |
| Comparative Example 301 | D-3 | H-1 (0.12) | 4.6 | A | 55 | 100< | 78 |
| Comparative Example 302 | D-3 | H-2 (0.12) | 3.2 | C | 25 | 38 | 68 |
| Comparative Example 303 | D-3 | H-3 (0.12) | 3.5 | B | 30 | 37 | 60 |

(continued)

| | Infrared absorber | Polymerization initiator | Color developability | Thermal and temporal stability (2) | On-machine developability (number of pieces) | Thermal and temporal stability (1) (number of pieces) | Printing resistance |
|---|---|---|---|---|---|---|---|
| Comparative Example 304 | D-3 | H-4 (0.12) | 2.5 | A | 100< | 35 | 63 |

In Table C, I-1, I-2, I-2-Na, I-7, I-10, I-10-Na, I-14, I-15, I-15-Na, I-20, I-21, and I-35 shown in the column of "polymerization initiator" indicate the specific compound of the present invention, and the structures thereof are as illustrated above. In addition, H-1, H-2, H-3, and H-4 were well-known compounds, and the structures thereof are as illustrated above. In Table C, numerical values in parentheses indicate the amounts added, and the unit is "g".

From the results shown in Table C, it is found that the lithographic printing plate precursors having the image-recording layer containing the specific compound as the polymerization initiator according to the present invention are excellent in terms of all of the thermal and temporal stability (1), the on-machine developability, the printing resistance, the color developability, and the thermal and temporal stability (2).

The lithographic printing plate precursors of the comparative examples containing a well-known polymerization initiator are poor in terms of any one or more of the thermal and temporal stability (1), the on-machine developability, the printing resistance, the color developability, or the thermal and temporal stability (2).

Examples 401 to 413 and Comparative Examples 401 to 404

[Production of Lithographic Printing Plate Precursor D]

A lithographic printing plate precursor D was produced by using the support D instead of the support A, applying an image-recording layer coating fluid (4) by means of bar coating instead of the image-recording layer coating fluid (1), and drying the coating aqueous solution in an oven at 50°C for 60 seconds, thereby forming an image-recording layer having a dried coating amount of 0.93 g/$m^2$ in the production of the lithographic printing plate precursor A. Infrared absorbers and acid-generating agents in the image-recording layer coating fluid (4) which were used to produce the respective lithographic printing plate precursors are summarized in Table D.

<Image-Recording Layer Coating Fluid (4)>

| | |
|---|---|
| • Infrared absorber (D-5) or (D-6) | 0.045 g |
| • Acid-generating agent shown in Table D (specific compound or well-known compound) | Amount shown in Table D |
| • Borate compound: TPB [illustrated above] | 0.010 g |
| • Polymer particle water dispersion liquid (2) [illustrated below] | 0.693 g |
| • Acid color-developing agent 2'-Anilino-6'-(N-ethyl-N-isopentylamino)-3'-methylspiro[phthalide-3,9'-xanthene] (S-205, manufactured by Fukui Yamada Chemical Co., Ltd.) | 0.080 g |
| • Glascol E15: (manufactured by Allied Colloids Manufacturing GMBH) | 0.09 g |
| • ERKOL WX48/20 (manufactured by ERKOL): | 0.09 g |
| • Zonyl FSO100 (manufactured by DuPont): | 0.0075 g |

The compounds which were used for the image-recording layer coating solution (4) and are expressed using trade names, the polymer particle water dispersion liquid (2), and the infrared absorbers (D-5) and (D-6) are as described below.

Glascol E15: Polyacrylic acid
ERKOL WX48/20: Polyvinyl alcohol/polyvinyl acetate copolymer
Zonyl FSO100: Surfactant
Polymer particle water dispersion liquid (2): A styrene/acrylonitrile copolymer stabilized with an anionic wetting agent (the molar ratio: 50/50, the average particle diameter: 61 nm, and the solid content: approximately 20%)

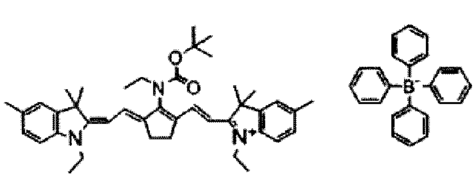

Infrared absorber (D-5)

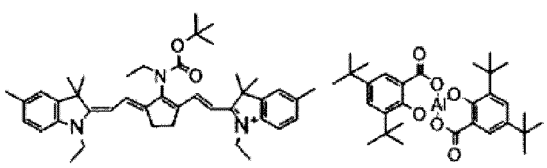

Infrared absorber (D-6)

[Evaluation of lithographic printing plate precursors]

For the respective lithographic printing plate precursors D, the thermal and temporal stability (1), the on-machine developability, the printing resistance, the color developability, and the thermal and temporal stability (2) were evaluated in the same manner as those of using the lithographic printing plate precursor B. The evaluation results are shown in Table D.

[Table 7]

Table D

| | Infrared absorber | Acid-generating agent | Color developability | Thermal and temporal stability (2) | On-machine developability (number of pieces) | Thermal and temporal stability (1) (number of pieces) | Printing resistance |
|---|---|---|---|---|---|---|---|
| Example 401 | D-5 | I-1 (0.3) | 5.8 | A | 22 | 32 | 75 |
| Example 402 | D-5 | I-4 (0.3) | 6.0 | A | 28 | 25 | 73 |
| Example 403 | D-5 | I-8 (0.3) | 6.1 | A | 25 | 30 | 70 |
| Example 404 | D-5 | I-20 (0.3) | 6.3 | A | 24 | 36 | 75 |
| Example 405 | D-5 | I-33 (0.3) | 6.4 | A | 20 | 29 | 75 |
| Example 406 | D-5 | I-39 (0.3) | 5.9 | A | 24 | 26 | 73 |
| Example 407 | D-5 | I-1-Na (0.06) H-4 (0.24) | 5.7 | A | 25 | 32 | 75 |
| Example 408 | D-5 | I-4-Na (0.06) H-4 (0.24) | 5.9 | A | 28 | 25 | 73 |
| Example 409 | D-5 | I-39-Na (0.06) H-4 (0.24) | 5.8 | A | 24 | 30 | 75 |
| Example 410 | D-5 | I-21 (0.3) | 5.8 | A | 24 | 20 | 77 |
| Example 411 | D-5 | I-29 (0.3) | 5.9 | A | 29 | 30 | 70 |
| Example 412 | D-5 | I-37 (0.3) | 6.3 | A | 22 | 28 | 80 |
| Example 413 | D-6 | I-8 (0.3) | 6.3 | A | 24 | 36 | 75 |
| Comparative Example 401 | D-5 | H-1 (0.12) | 5.5 | A | 48 | 100< | 70 |
| Comparative Example 402 | D-5 | H-2 (0.12) | 4.5 | C | 21 | 50 | 70 |
| Comparative Example 403 | D-5 | H-3 (0.12) | 3.5 | B | 25 | 40 | 60 |

(continued)

| | Infrared absorber | Acid-generating agent | Color developability | Thermal and temporal stability (2) | On-machine developability (number of pieces) | Thermal and temporal stability (1) (number of pieces) | Printing resistance |
|---|---|---|---|---|---|---|---|
| Comparative Example 404 | D-5 | H-4 (0.12) | 2.5 | A | 100< | 35 | 63 |
| In Table D, I-1, I-1-Na, I-4, I-4-Na, I-8, I-20, I-21, I-29, I-33, I-37, and I-39 shown in the column of "acid-generating agent" indicate the specific compound of the present invention, and the structures thereof are as illustrated above. I-39-Na is a compound constituted of an anion and a sodium cation which is represented by 1-39. In addition, H-1, H-2, H-3, and H-4 were well-known compounds, and the structures thereof are as illustrated above. In Table D, numerical values in parentheses indicate the dried coating amounts, and the unit is "g". | | | | | | | |

From the results shown in Table D, it is found that the lithographic printing plate precursors having the image-recording layer containing the specific compound according to the present invention as the acid-generating agent are excellent in terms of all of the thermal and temporal stability (1), the on-machine developability, the printing resistance, the color developability, and the thermal and temporal stability (2).

The lithographic printing plate precursors of the comparative examples containing a well-known acid-generating agent are poor in terms of any one or more of the thermal and temporal stability (1), the on-machine developability, the printing resistance, the color developability, or the thermal and temporal stability (2).

According to the present invention, it is possible to provide a curable composition that has favorable thermal and temporal stability and favorably cures by light irradiation.

In addition, according to the present invention, it is possible to provide a lithographic printing plate precursor which has favorable thermal and temporal stability, is excellent in terms of on-machine developability, and can be used to produce lithographic printing plates having excellent printing resistance.

Furthermore, according to the present invention, it is possible to provide a lithographic printing plate precursor which has favorable thermal and temporal stability, is excellent in terms of a plate inspection property and on-machine developability, and can be used to produce lithographic printing plates having excellent printing resistance.

Furthermore, according to the present invention, it is possible to provide a method for producing a lithographic printing plate using the lithographic printing plate precursor.

The present invention has been described in detail with reference to specific embodiments, but it is evident to a person skilled in the art that a variety of modifications or corrections can be added within the scope of the concept and scope of the present invention.

The present application is based on a Japanese Patent Application filed on February 28, 2017 (JP2017-037593) and the contents thereof are incorporated herein by reference.

## Claims

1. A curable composition comprising:
   a salt compound including (A) an organic anion having a negative charge present on an aluminum atom or a phosphorus atom and (B) a counter cation.

2. The curable composition according to claim 1,
   wherein the organic anion is represented by Formula (I), (II), or (III),

   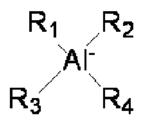
   (I)
   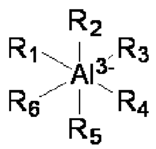
   (II)
   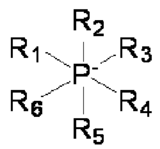
   (III)

   in Formulae (I), (II), and (III), $R_1$, $R_2$, $R_3$, $R_4$, $R_5$, and $R_6$ each independently represent an alkyl group, an aryl group, an alkenyl group, an alkynyl group, a cycloalkyl group, or a heterocyclic group or two or more of $R_1$, $R_2$, $R_3$, $R_4$, $R_5$, and $R_6$ may bond to each other to form a ring with the aluminum atom or the phosphorus atom.

3. The curable composition according to claim 1 or 2,
   wherein the organic anion is represented by Formula (IV), (V), or (VI),

   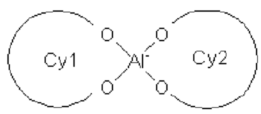
   (IV)
   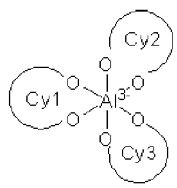
   (V)
   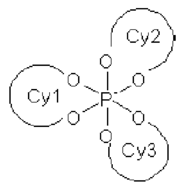
   (VI)

in Formulae (IV), (V), and (VI), Cy1 to Cy3 may be identical to or different from each other and represent a ring structure formed with the aluminum atom or the phosphorus atom and two oxygen atoms that directly bond to the aluminum atom or the phosphorus atom.

**4.** The curable composition according to any one of claims 1 to 3,
wherein the organic anion is represented by Formula (VII), (VIII), or (IX),

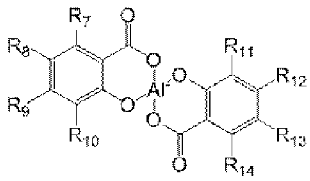
(V I I)

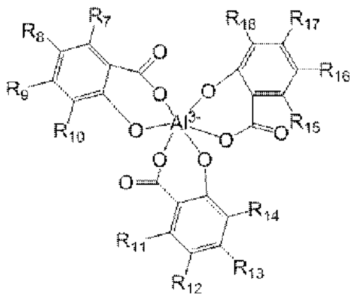
(V I I I)

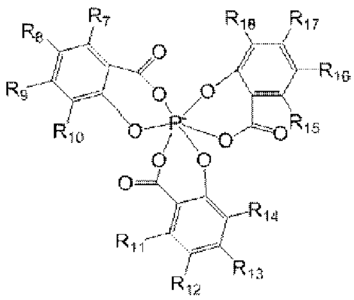
(I X)

in Formulae (VII), (VIII), and (IX), $R_7$, $R_8$, $R_9$, $R_{10}$, $R_{11}$, $R_{12}$, $R_{13}$, $R_{14}$, $R_{15}$, $R_{16}$, $R_{17}$, and $R_{18}$ may be identical to or different from each other and represent a hydrogen atom, an alkyl group, an alkenyl group, an aryl group, an alkoxy group, an alkoxycarbonyl group, an aryloxycarbonyl group, an alkylamide group, an arylamide group, an alkylurea group, or an arylurea group or two of the above-described atom or groups adjacent to each other may bond to each other to form a ring.

**5.** The curable composition according to any one of claims 1 to 4,
wherein the counter cation is a diaryliodonium cation or a triarylsulfonium cation.

**6.** The curable composition according to any one of claims 1 to 4,
wherein the counter cation is an alkali metal ion, an alkali earth metal ion, or an organic cation having a positive charge on a nitrogen atom.

**7.** The curable composition according to any one of claims 1 to 6, further comprising:
a polymerizable compound; and an infrared absorber.

**8.** The curable composition according to claim 7,
wherein the infrared absorber is a cyanine colorant.

**9.** The curable composition according to any one of claims 1 to 8, further comprising:
an acid color-developing agent.

**10.** The curable composition according to any one of claims 1 to 9, further comprising:
a polymer particle.

**11.** The curable composition according to any one of claims 1 to 10, further comprising:
a binder polymer.

**12.** A curable composition for a lithographic printing plate according to any one of claims 1 to 11.

**13.** A lithographic printing plate precursor comprising:

a support; and
an image-recording layer containing the curable composition according to any one of claims 1 to 12 on the support.

**14.** The lithographic printing plate precursor according to claim 13, further comprising:
a protective layer on the image-recording layer.

**15.** A method for producing a lithographic printing plate comprising:

a step of image-exposing the lithographic printing plate precursor according to claim 13 or 14; and
a step of removing a non-exposed portion of the image-recording layer on a printer using at least one selected from printing ink or dampening water.

**Amended claims under Art. 19.1 PCT**

**1.** (amended) A lithographic printing plate precursor comprising:

a support; and
an image-recording layer containing the curable composition, the curable composition comprising:

a salt compound including (A) an organic anion having a negative charge present on an aluminum atom or a phosphorus atom and (B) a counter cation;
a polymerizable compound; and
an infrared absorber.

**2.** The lithographic printing plate precursor according to claim 1,
wherein the organic anion is represented by Formula (I), (II), or (III),

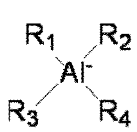
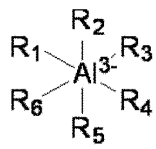
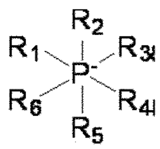

(I) (I I) (I I I)

in Formulae (I), (II), and (III), $R_1$, $R_2$, $R_3$, $R_4$, $R_5$, and $R_6$ each independently represent an alkyl group, an aryl group, an alkenyl group, an alkynyl group, a cycloalkyl group, or a heterocyclic group or two or more of $R_1$, $R_2$, $R_3$, $R_4$, $R_5$, and $R_6$ may bond to each other to form a ring with the aluminum atom or the phosphorus atom.

**3.** The lithographic printing plate precursor according to claim 1 or 2,
wherein the organic anion is represented by Formula (IV), (V), or (VI),

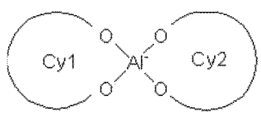
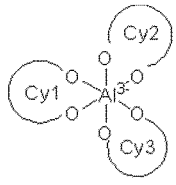
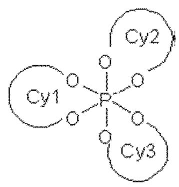

(I V) (V) (V I)

in Formulae (IV), (V), and (VI), Cy1 to Cy3 may be identical to or different from each other and represent a ring structure formed with the aluminum atom or the phosphorus atom and two oxygen atoms that directly bond to the aluminum atom or the phosphorus atom.

**4.** The lithographic printing plate precursor according to any one of claims 1 to 3,
wherein the organic anion is represented by Formula (VII), (VIII), or (IX),

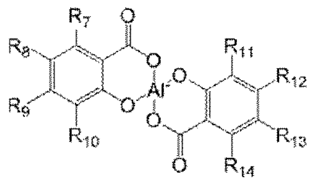

(VII)

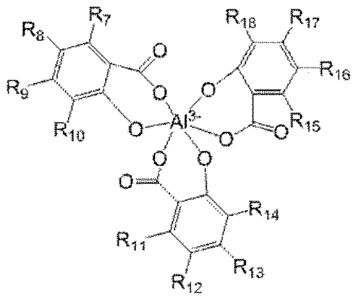

(VIII)

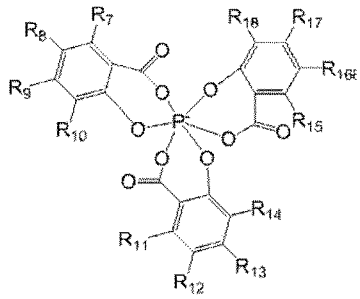

(IX)

in Formulae (VII), (VIII), and (IX), $R_7$, $R_5$, $R_9$, $R_{10}$, $R_{11}$, $R_{12}$, $R_{13}$, $R_{14}$, $R_{15}$, $R_{16}$, $R_{17}$, and $R_{18}$ may be identical to or different from each other and represent a hydrogen atom, an alkyl group, an alkenyl group, an aryl group, an alkoxy group, an alkoxycarbonyl group, an aryloxycarbonyl group, an alkylamide group, an arylamide group, an alkylurea group, or an arylurea group or two of the above-described atom or groups adjacent to each other may bond to each other to form a ring.

**5.** The lithographic printing plate precursor according to any one of claims 1 to 4, wherein the counter cation is a diaryliodonium cation or a triarylsulfonium cation.

**6.** The lithographic printing plate precursor according to any one of claims 1 to 4, wherein the counter cation is an alkali metal ion, an alkali earth metal ion, or an organic cation having a positive charge on a nitrogen atom.

**7.** The lithographic printing plate precursor according to any one of claims 1 to 6, wherein the infrared absorber is a cyanine colorant.

**8.** The lithographic printing plate precursor according to any one of claims 1 to 7, wherein the curable composition further comprises an acid color-developing agent.

**9.** The lithographic printing plate precursor according to any one of claims 1 to 8, wherein the curable composition further comprises a polymer particle.

**10.** The lithographic printing plate precursor according to any one of claims 1 to 9, wherein the curable composition further comprises a binder polymer.

**11.** The lithographic printing plate precursor according to any one of claims 1 to 10, further comprising a protective layer on the image-recording layer.

**12.** A method for producing a lithographic printing plate comprising:

a step of image-exposing the lithographic printing plate precursor according to any one of claims 1 to 10; and
a step of removing a non-exposed portion of the image-recording layer on a printer using at least one selected from printing ink or dampening water.

**13.** (Canceled)

**14.** (Canceled)

**15.** (Canceled)

## INTERNATIONAL SEARCH REPORT

International application No. PCT/JP2018/007305

A. CLASSIFICATION OF SUBJECT MATTER
Int. Cl. C08F2/50(2006.01)i, B41C1/00(2006.01)i, C08F290/06(2006.01)i, C05L101/00(2006.01)i, G03F7/00(2006.01)i, G03F7/004(2006.01)i, G03F7/029(2006.01)i
According to International Patent Classification (IPC) or to both national classification and IPC

B. FIELDS SEARCHED
Minimum documentation searched (classification system followed by classification symbols)
Int. Cl. C08F2/50, B41C1/00, C08F290/06, C08L101/00, G03F7/00, G03F7/004, G03F7/029

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 03-209477 A (FUJI PHOTO FILM CO., LTD.) 12 September 1991, claims, page 4, lower right column, line 5 to page 5, lower left column, line 11, page 11, upper right column, line 4 to line 15, page 13, upper right column, line 1 to lower left column, line 8 & US 5532373 A1, claims, column 5, line 39 to column 6, line 31, column 22, line 56 to line 67, column 24, line 64 to column 25, line 43 & EP 422686 A2 & DE 69030477 T | 1-4, 6-15<br>5, 7-15 |
| Y | WO 2007/052470 A1 (KONICA MINOLTA MEDICAL & GRAPHIC, INC.) 10 May 2007, paragraphs [0049]-[0053] & US 2009/0110832 A1, paragraphs [0058]-[0060] & EP 1944174 A1 & CN 101316721 A | 5, 7-15 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 14.05.2018 | 29.05.2018 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2018/007305

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2009-538446 A (EASTMAN KODAK CO.) 05 November 2009, claims & US 2007/0275322 A1, claims & WO 2007/139687 A1 & EP 2021873 A1 & CA 2649088 A1 & CN 101454722 A & RU 2008151777 A & AU 2007268133 A & BR PI0712408 A & ES 2402583 T | 5, 7-15 |
| A | JP 47-041100 B1 (KYOWA GAS CHEMICAL INDUSTRIES CO., LTD.) 17 October 1972, entire text (Family: none) | 1-15 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009538446 A
- JP 2001133969 A
- JP 2002023360 A
- JP 2002040638 A
- JP 2002278057 A
- JP 2008195018 A
- JP 2007090850 A
- JP 5005005 A
- JP H05005005 A
- JP 2001222101 A
- JP 2006508380 A
- JP 2002287344 A
- JP 2008256850 A
- JP 2001342222 A
- JP 9179296 A
- JP H09179296 A
- JP 9179297 A
- JP H09179297 A
- JP 9179298 A
- JP H09179298 A
- JP 2004294935 A
- JP 2006243493 A
- JP 2002275129 A
- JP 2003064130 A
- JP 2003280187 A
- JP 10333321 A
- JP H10333321 A
- JP 48041708 B
- JP S48041708 B
- JP 51037193 A
- JP S51037193 A
- JP 2032293 B
- JP H02032293 B
- JP 2016765 B
- JP H02016765 B
- JP 2003344997 A
- JP 2006065210 A
- JP 58049860 B
- JP S58049860 B
- JP 56017654 B
- JP S56017654 B
- JP 62039417 B
- JP S62039417 B
- JP 62039418 B
- JP 2000250211 A
- JP 2007094138 A
- US 7153632 B
- JP 8505958 A
- JP H08505958 A
- JP 2007293221 A
- JP 2007293223 A
- JP 8108621 A
- JP H08108621 A
- JP 61166544 A
- JP S61166544 A
- JP 2002328465 A
- US 4708925 A
- JP 7020629 A
- US 5135838 A
- US 5200544 A
- JP 2100054 A
- JP H02100054 A
- JP 2100055 A
- JP H02100055 A
- JP 9197671 A
- JP H09197671 A
- JP 2008001740 A
- JP 2003328465 A
- JP 2000066385 A
- JP 2000080068 A
- JP 7271029 A
- JP H07271029 A
- JP 9123387 A
- JP H09123387 A
- JP 9131850 A
- JP H09131850 A
- JP 9171249 A
- JP H09171249 A
- JP 9171250 A
- JP H09171250 A
- EP 931647 B
- JP 2001277740 A
- JP 2001277742 A
- JP 2007276454 A
- JP 2009154525 A
- JP 2006297907 A
- JP 2007050660 A
- JP 2008284858 A
- JP 2009090645 A
- JP 2009208458 A
- JP 2008284817 A
- JP 10282679 A
- JP H10282679 A
- JP 2304441 A
- JP H02304441 A
- JP 2005238816 A
- JP 2005125749 A

- JP 2006239867 A
- JP 2006215263 A
- JP 2006188038 A
- US 3458311 A
- JP 55049729 B
- JP S55049729 B
- JP 2005250216 A
- JP 2006259137 A
- JP 2001253181 A
- JP 2001322365 A
- US 2714066 A
- US 3181461 A
- US 3280734 A
- US 3902734 A
- US 3276868 A
- US 4153461 A
- US 4689272 A
- JP 5045885 A
- JP H05045885 A
- JP 6035174 A
- JP H06035174 A
- JP 2017037593 A


**Non-patent literature cited in the description**


- Dye Handbooks. 1970
- *J. C. S. Perkin II,* 1979, 1653-1660
- *J. C. S. Perkin II,* 1979, 156-162
- *Journal of Photopolymer Science and Technology,* 1995, 202-232